(19) Europäisches Patentamt
European Patent Office
Office européen des brevets

(11) **EP 4 163 671 B1**

(12) **EUROPEAN PATENT SPECIFICATION**

(45) Date of publication and mention
of the grant of the patent:
**05.08.2026   Bulletin 2026/32**

(21) Application number: **20942365.6**

(22) Date of filing: **24.06.2020**

(51) International Patent Classification (IPC):
*G01S 7/35* (2006.01)       *G01S 13/34* (2006.01)
*G01S 13/42* (2006.01)       *G01S 13/931* (2020.01)

(52) Cooperative Patent Classification (CPC):
**G01S 13/931; G01S 7/354; G01S 13/343;
G01S 13/42**

(86) International application number:
**PCT/CN2020/098212**

(87) International publication number:
**WO 2021/258358 (30.12.2021 Gazette 2021/52)**

(54) **TARGET DETECTION METHOD AND APPARATUS, RADAR, AND VEHICLE**

ZIELERKENNUNGSVERFAHREN UND -VORRICHTUNG, RADAR UND FAHRZEUG

PROCÉDÉ ET APPAREIL DE DÉTECTION DE CIBLE, RADAR ET VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.04.2023   Bulletin 2023/15**

(73) Proprietor: Yinwang Intelligent Technologies Co.,
Ltd.
**Shenzhen, Guangdong 518110 (CN)**

(72) Inventors:
• **LI, Dejian**
  **Shenzhen, Guangdong 518129 (CN)**
• **LAO, Dapeng**
  **Shenzhen, Guangdong 518129 (CN)**
• **YANG, Chen**
  **Shenzhen, Guangdong 518129 (CN)**

• **WANG, Ben**
  **Shenzhen, Guangdong 518129 (CN)**
• **ZHU, Jintai**
  **Shenzhen, Guangdong 518129 (CN)**

(74) Representative: **Maiwald GmbH
Elisenhof
Elisenstraße 3
80335 München (DE)**

(56) References cited:
CN-A- 102 540 189       CN-A- 109 917 340
CN-A- 110 231 617       CN-A- 110 320 509
CN-A- 110 907 930       CN-A- 111 308 458
JP-A- 2001 324 566       JP-A- H11 344 559
JP-B2- 3 383 819         US-A- 5 625 362
US-A- 6 140 954          US-B2- 9 778 355

**Description**

**TECHNICAL FIELD**

This application relates to the field of radar technologies, and in particular, to a target detection method and apparatus, a radar, and a vehicle.

**BACKGROUND**

A vehicle-mounted millimeter-wave radar (radar) is one of indispensable sensors in the field of autonomous driving due to an all-weather detection capability. To obtain high angular resolution, a large array aperture can be obtained by using a multiple-input multiple-output (Multiple Input Multiple Output, MIMO) radar technology when a quantity of antennas is limited. A time-division multiplexing (Time-Division Multiplexing, TDM) MIMO transmission mode becomes an important research direction of the vehicle-mounted millimeter-wave MIMO radar due to advantages such as simple hardware implementation and a low mutual coupling effect between multi-channel received signals. A frequency modulated continuous waveform (Frequency Modulated Continuous Waveform, FMWC) is a common vehicle-mounted radar transmitting waveform in TDM-MIMO.

The vehicle-mounted millimeter-wave radar can determine a range, a speed, and an angle of a target based on frequency information and phase information of a radar echo. In an actual road environment, because a quantity of targets have a same range, speed, or angle, the vehicle-mounted millimeter-wave radar usually faces an application scenario of multi-target detection on a signal spectrum (for example, an angle spectrum, a speed measurement spectrum, or a ranging spectrum). In a working environment of the vehicle-mounted millimeter-wave radar, because a dynamic range of signal strength of a target is very large, a problem of "the strong overwhelms the weak" easily occurs in a multi-target detection process, that is, a strong-signal target overwhelms a weak-signal target, and consequently the weak-signal target cannot be accurately detected. Therefore, a target detection method is urgently needed to resolve the problem of "the strong overwhelms the weak".

US 9,778,355 B2 describes a signal processing method for frequency-modulated continuous waveform radar systems.

**SUMMARY**

The present invention is defined by the subject-matter of the independent claims. Additional features of the invention are presented in the dependent claims.

An embodiment of this application provides a target detection method, applied to a radar. The method includes: obtaining a signal spectrum based on a received signal of a receive antenna of the radar; reconstructing a received signal corresponding to a target that is in the signal spectrum and that is greater than or equal to a signal strength threshold, where the target that is in the signal spectrum and that is greater than or equal to the signal strength threshold is, for example, a target with highest signal strength in the signal spectrum; eliminating a reconstructed received signal in the signal spectrum to obtain an updated signal spectrum, where the updated signal spectrum represents a signal spectrum that does not include the target; determining, in the updated signal spectrum, a parameter of a target that is greater than or equal to the signal strength threshold; and obtaining at least one of location information or speed information of the determined target based on the determined parameter of the target.

According to the target detection method provided in this embodiment of this application, the received signal corresponding to the target that is in the signal spectrum and that is greater than or equal to the signal strength threshold is reconstructed, and the reconstructed received signal is eliminated from the signal spectrum, to avoid interference of the eliminated received signal (strong target signal) to the determining of a parameter of another target (weak target signal) in the signal spectrum, so as to avoid a problem of "the strong overwhelms the weak". Especially, when the target that is in the signal spectrum and that is greater than or equal to the signal strength threshold is the target with the highest signal strength in the signal spectrum, interference caused by the target with the highest signal strength in the signal spectrum to another target can be avoided, a problem of "the strong overwhelms the weak" can be effectively avoided, and detection precision of the another target can be further improved.

According to the invention, the radar presents an elimination condition, and the eliminating a reconstructed received signal in the signal spectrum to obtain an updated signal spectrum includes: eliminating the reconstructed received signal in the signal spectrum after determining that the signal spectrum meets the elimination condition, to obtain the updated signal spectrum, where the elimination condition includes at least one of the following:

an amplitude of the target that is in the signal spectrum and that is greater than or equal to the signal strength threshold is less than an amplitude threshold; a peak-to-average ratio of the target that is in the signal spectrum and that is greater than or equal to the signal strength threshold is less than a peak-to-average ratio threshold; and a quantity of times of eliminating a reconstructed received signal after the signal spectrum is obtained is less than a quantity-of-times threshold.

The amplitude threshold, the peak-to-average ratio threshold, and the quantity-of-times threshold may all be preset thresholds. The amplitude threshold may be an amplitude value corresponding to a smallest object that can be detected by the radar, and is related to detection precision of the radar.

Optionally, after the determining, in the updated signal spectrum, a parameter of a target that is greater than or equal to the signal strength threshold, the method further includes:

after determining that the updated signal spectrum meets the elimination condition, repeatedly reconstructing a received signal corresponding to a target that is in the signal spectrum and that is greater than or equal to the signal strength threshold and determining, in the updated signal spectrum, a parameter of a target that is greater than or equal to the signal strength threshold, until an updated signal spectrum does not meet the elimination condition. By repeating the process of reconstructing a received signal corresponding to a target that is in the signal spectrum and that is greater than or equal to the signal strength threshold and determining, in the updated signal spectrum, a parameter of a target that is greater than or equal to the signal strength threshold, a plurality of targets with strong signal strength in the signal spectrum may be obtained through serial identification, to avoid interference to a weak-signal target. When the signal spectrum does not meet the elimination condition, further performing the signal elimination operation easily affects final detection precision. Therefore, impact on detection precision can be avoided by setting the elimination condition.

Optionally, the eliminating a reconstructed received signal in the signal spectrum to obtain an updated signal spectrum includes: determining a difference between the received signal corresponding to the signal spectrum and the reconstructed received signal as a signal corresponding to the updated signal spectrum; and determining the updated signal spectrum based on the signal corresponding to the updated signal spectrum.

Optionally, the reconstructing a received signal corresponding to a target that is in the signal spectrum and that is greater than or equal to a signal strength threshold includes: determining another parameter in the signal spectrum based on the parameter of the target that is in the signal spectrum and that is greater than or equal to the signal strength threshold, where the another parameter is a parameter required for reconstructing the received signal corresponding to the target that is greater than or equal to the signal strength threshold, and the another parameter, for example, includes: one or more of an amplitude value corresponding to the target in the signal spectrum, a sequence number corresponding to the amplitude value, and a phase corresponding to the amplitude value; and reconstructing, by the radar based on the another parameter in the signal spectrum, the received signal corresponding to the target.

Optionally, after it is determined that the signal spectrum is obtained based on a digital beamforming DBF algorithm, an amplitude of each element of the reconstructed received signal is equal to a preset multiple of a maximum amplitude value of the signal spectrum, and an initial phase of the reconstructed received signal is equal to a phase corresponding to the maximum amplitude value.

For example, the preset multiple is a reciprocal of a quantity of receive antennas of the radar.

Optionally, after it is determined that the signal spectrum is obtained based on a Fourier transform algorithm, the reconstructed received signal is equal to a product of a proportional scaling coefficient and inverse Fourier transform of a first signal spectrum. The first signal spectrum and the signal spectrum have an equal length. A value of another point in the first signal spectrum other than a point having a same location, amplitude, and phase as a point at which a maximum amplitude value of the signal spectrum is located is 0.

Optionally, the signal spectrum is an angle spectrum, and the parameter of the target includes an angle; or the signal spectrum is a speed measurement spectrum, and the parameter of the target includes a speed; or the signal spectrum is a ranging spectrum, and the parameter of the target includes a range.

Optionally, the location information mentioned above may include location coordinates in a specified three-dimensional coordinate system (for example, an earth coordinate system), and the speed information may include a speed of the target relative to the radar (that is, a relative speed of the target) and/or an absolute speed of the target (that is, an actual speed of the target). For example, the radar may map the target to the specified three-dimensional spatial coordinate system based on a range between the target and the radar (that is, an angle obtained by using the foregoing ranging spectrum) and an angle between the target and the radar (that is, an angle obtained by using the foregoing angle spectrum), to form a radar point cloud (Point Cloud), so as to determine accurate location coordinates of the target based on the radar point cloud. For another example, the radar may determine a speed obtained by using the speed measurement spectrum as the speed of the target relative to the radar. Further, optionally, the radar may determine the absolute speed of the target based on the speed of the radar and the speed of the target relative to the radar.

According to a second aspect, this application provides a target identification apparatus. The target identification apparatus may include at least one module, and the at least one module may be configured to implement the target identification method provided in the first aspect or the possible implementations of the first aspect.

According to a third aspect, this application provides a computer device, where the computer device includes a processor and a memory. The memory stores computer instructions. The processor executes the computer instructions stored in the memory, so that the computer device performs the method provided in the first aspect or the possible implementations of the first aspect, and the computer device deploys the target identification method provided in the first aspect or the possible implementations of the first aspect.

According to a fourth aspect, this application provides a computer-readable storage medium, where the computer-readable storage medium stores a computer program, and when the computer program is executed by a processor, the target identification method provided in the first aspect or the possible implementations of the first aspect is implemented.

According to a fifth aspect, this application provides a radar, where the radar includes:

a transmit antenna, a receive antenna, a processor, and a memory, where the memory stores instructions, and the processor executes the instructions to implement the target identification method provided in the first aspect or the possible implementations of the first aspect.

According to a sixth aspect, this application provides a vehicle, including a vehicle body and the radar according to the fifth aspect.

According to a seventh aspect, this application provides a computer program product. The computer program product includes computer instructions, and the computer instructions are stored in a computer-readable storage medium. A processor of a computer device may read the computer instructions from the computer-readable storage medium, and the processor executes the computer instructions, so that the computer device performs the target identification method provided in the first aspect or the possible implementations of the first aspect.

According to an eighth aspect, a chip is provided. The chip may include a programmable logic circuit and/or program instructions. When running, the chip is configured to implement the target identification method according to the first aspect.

## BRIEF DESCRIPTION OF DRAWINGS

FIG. 1 is a schematic diagram of an application scenario of a radar according to an embodiment of this application;
FIG. 2 is a schematic diagram of a frame structure of an FMWC signal according to an embodiment of this application;
FIG. 3 is a schematic flowchart of a target detection method according to an embodiment of this application;
FIG. 4 is a schematic diagram of signal receiving of L receive antennas according to an embodiment of this application;
FIG. 5 is a schematic diagram of a principle of fast Fourier transform according to an embodiment of this application;
FIG. 6 is a schematic diagram of ranging spectrums aligned based on range parameters according to an embodiment of this application;
FIG. 7 is a schematic diagram of a principle of a speed measurement slow-time dimension operation according to an embodiment of this application;
FIG. 8 is a schematic diagram of an RD map according to an embodiment of this application;
FIG. 9 is a schematic diagram of an AOA spectrum according to an embodiment of this application;
FIG. 10 is a schematic flowchart of another target detection method according to an embodiment of this application;
FIG. 11 is a schematic flowchart of still another target detection method according to an embodiment of this application;
FIG. 12 is a schematic diagram of a target identification scenario in which a radar is located;
FIG. 13 is a schematic diagram of AOA spectrum comparison according to an embodiment of this application;
FIG. 14 is a block diagram of a target detection apparatus according to an embodiment of this application;
FIG. 15 is a block diagram of another target detection apparatus according to an embodiment of this application;
FIG. 16 shows a possible basic hardware architecture of a computer device according to an embodiment of this application;
FIG. 17 is a schematic diagram of a structure of a radar according to an embodiment of this application; and
FIG. 18 is a schematic diagram of a structure of a vehicle according to an embodiment of this application.

## DESCRIPTION OF EMBODIMENTS

To make principles and technical solutions of this application clearer, the following further describes implementations of this application in detail with reference to the accompanying drawings.

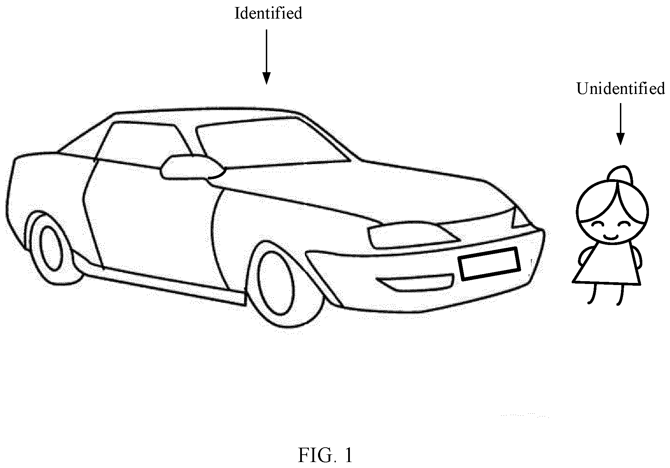

When a radar performs multi-target detection, a problem of "the strong overwhelms the weak" easily occurs. FIG. 1 is a schematic diagram of a target detection scenario of a radar according to an embodiment of this application. In FIG. 1, it is assumed that there is a vehicle and a person in an environment in which the radar is located, and radar cross sections (Radar Cross Section, RCS) of the vehicle and the person are respectively 20 dBsm (decibels per square meter) and 0 dBsm. When windowing processing is not performed on a signal received by the radar, a side lobe of a detected signal corresponding to the vehicle is higher than a main lobe of a signal corresponding to the person. As a result, the signal corresponding to the person is "overwhelmed". Finally, the radar identifies the vehicle but does not identify the person, and a situation in which the radar does not detect the person occurs.

Vehicles, pedestrians, and buildings in a road environment may all be referred to as targets of the radar. For a high-resolution radar, one target (for example, one vehicle) may be usually identified as a plurality of "target points", to form a "point cloud" detection output. In embodiments of this application, a target and a target point are not distinguished, and are collectively referred to as a target.

Embodiments of this application provide a target detection method applied to a radar, to resolve the problem of "the strong overwhelms the weak". First, for ease of understanding by a reader, the following briefly describes a radar used in the target detection method provided in embodiments of this application.

Optionally, the radar in embodiments of this application is a millimeter-wave radar, and the millimeter-wave radar is a radar operating in a millimeter wave (millimeter wave) band for detection. A common millimeter wave refers to a wave whose frequency domain is between 30 GHz (gigahertz) and 300 GHz, and a wavelength of the millimeter wave is 1 mm (millimeter) to 10 mm. The wavelength of the millimeter wave is between a wavelength of a microwave and a wavelength of a centimeter wave. Therefore, the millimeter-wave radar integrates some advantages of both a microwave radar and a photoelectric radar.

Optionally, the radar in embodiments of this application is a MIMO radar or a single-input multiple-output (Single-Input Multiple-Output, SIMO) radar. The MIMO radar refers to a radar having a plurality of transmit antennas and a plurality of receive antennas. The MIMO radar can obtain a large array aperture when a quantity of antennas is limited. For a MIMO radar having N transmit antennas and L receive antennas, where N and L are positive integers greater than 1, the MIMO radar may form $N \times L$ virtual receive antennas. Each virtual receive antenna corresponds to one virtual receive channel.

The SIMO radar refers to a radar having one transmit antenna and a plurality of receive antennas. For a SIMO radar with one transmit antenna and L receive antennas, there are L physical receive antennas in total. Each physical receive antenna corresponds to one physical receive channel.

For ease of description, for the MIMO radar and the SIMO radar, in subsequent embodiments of this application, the virtual receive antennas and the physical receive antennas are collectively referred to as receive antennas (also referred to as RX antennas).

The transmit antenna of the radar transmits an electromagnetic wave, and the receive antenna receives a radar echo. The electromagnetic wave emitted by the transmit antenna of the radar may be a frequency modulated continuous wave (Frequency Modulated Continuous Waveform, FMWC). The FMWC is a vehicle-mounted radar transmitting waveform, and can achieve good pulse compression and a small intermediate-frequency bandwidth. In embodiments of this application, an FMWC signal may be transmitted in a plurality of manners. For example, the FMWC signal may be transmitted by using a standard such as TDM, Doppler frequency division multiplexing (Doppler frequency Division Multiplexing, DDM), or code division multiplexing (Code Division Multiplexing, CDM). Optionally, the FMWC may alternatively be transmitted by using a combined standard of at least two of the foregoing three standards. For example, the combined standard may be a combined standard of TDM and DDM.

In embodiments of this application, the FMWC signal may have a plurality of types of waveforms. For example, the FMWC signal is a non-stationary signal, and includes a plurality of chirp (Chirp) signals. A chirp signal is a signal whose carrier frequency increases linearly within pulse duration when a pulse is encoded.

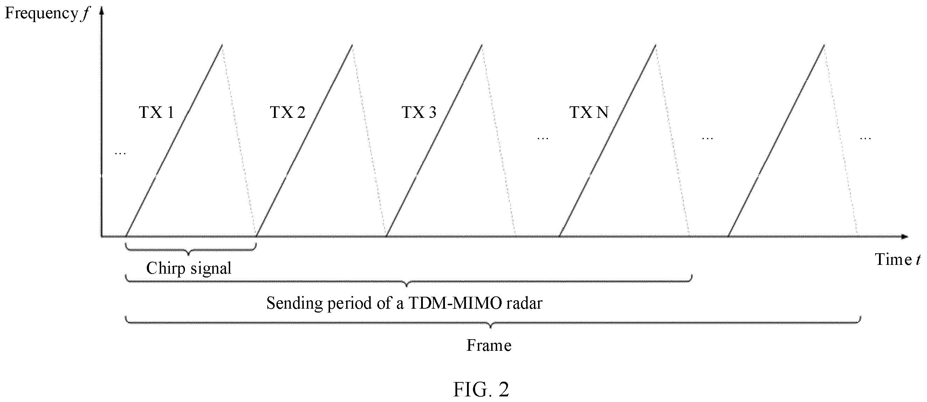

For example, FIG. 2 is a schematic diagram of a frame structure of an FMWC signal. In FIG. 2, a horizontal axis represents time, and a vertical axis represents frequency. For a TDM-MIMO radar having N transmit antennas, in one sending period, each of the N transmit antennas sends one chirp signal, where N is a positive integer. In this case, one frame (frame) of signal (also referred to as one signal frame) of the FMWC signal includes chirp signals in a plurality of sending periods (for example, 64 sending periods, 128 sending periods, or 256 sending periods), and in each sending period, there are N chirp signals.

FIG. 2 merely shows a schematic frame structure of an FMWC signal of a TDM-MIMO radar. During actual implementation of embodiments of this application, the FMWC signal transmitted by the transmit antenna may be further transformed based on FIG. 2. Optionally, the FMCW signal sent by each transmit antenna may generate a shift in a specified signal domain (or referred to as a signal dimension), for example, generate a frequency shift in frequency domain, or generate a time shift in time domain; or a slope of a signal in the FMCW signal may be changed. A frame structure of the FMWC signal is not limited in embodiments of this application.

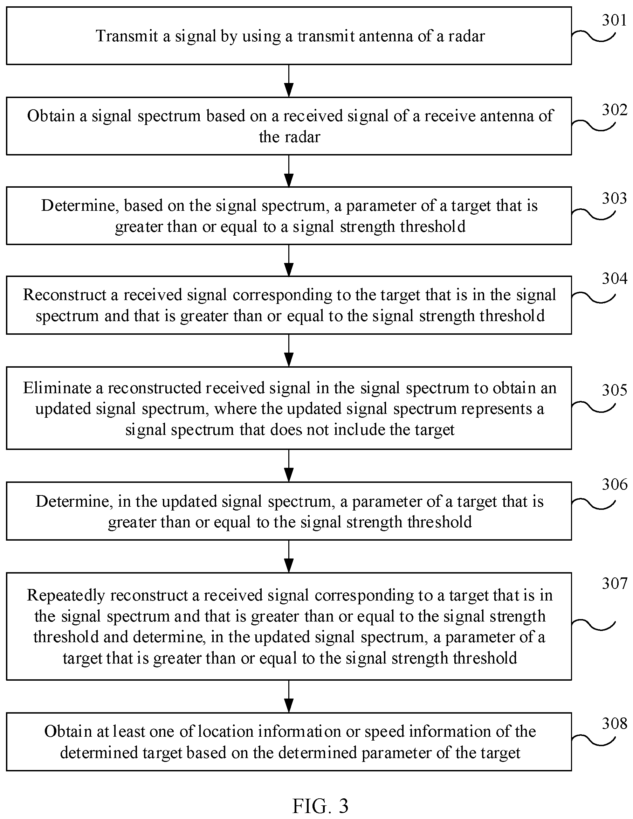

FIG. 3 is a schematic flowchart of a target detection method according to an embodiment of this application. The target is an object that needs to be detected by a radar. The method includes the following steps.

S301: Transmit a signal by using a transmit antenna of a radar.

As described above, the radar may be a MIMO radar or a SIMO radar. The radar transmits the signal by using the transmit antenna of the radar, and the transmitted signal may be an FMWC signal. For example, a frame structure thereof may be shown in FIG. 2. For a signal transmitted by each transmit antenna, processes in which a receive antenna of the radar receives the signal and processes the signal are the same. Therefore, in subsequent embodiments of this application, an example in which the radar receives and processes a signal transmitted by one transmit antenna is used for description. If the radar includes a plurality of transmit antennas, for a process in which the radar receives and processes a signal from each transmit antenna, refer to a subsequent process.

S302: Obtain a signal spectrum based on a received signal of a receive antenna of the radar.

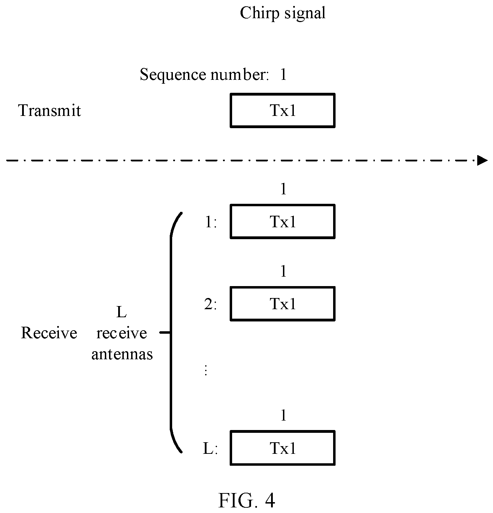

As shown in FIG. 4, for a radar with L receive antennas, if a transmit end sends one chirp signal, each receive antenna at a receive end receives one chirp signal. Therefore, received radar echoes are L chirp signals. In FIG. 4, it is assumed that a chirp signal sent by the transmit end is identified as a chirp signal Tx0, and a corresponding sequence number is 1. The sequence number indicates a position of the chirp signal in a frame of signals. For a waveform of the chirp signal Tx0, refer to a waveform of a chirp signal in FIG. 2. In this case, at the receive end of the radar, the L receive antennas receive L chirp signals Tx0 in total, and corresponding sequence numbers are 1.

An initial signal received by the radar by using the receive antenna is an analog signal. The radar may perform analog-to-digital conversion on the received signal to obtain a digital signal, and use the digital signal as the received signal. The analog-to-digital conversion process may be a process of performing signal sampling in time domain. For example, the radar continuously samples each signal frame to obtain a plurality of sampling points, and obtain a digital signal of each signal frame. A length of each signal frame may be equal to a length of a signal frame at the transmit end, for example, a length of chirp signals in 64 sending periods, 128 sending periods, or 256 sending periods. Optionally, the foregoing analog-to-digital conversion process may be performed by an analog-to-digital converter (Analog-to-Digital Converter, ADC) in the radar.

After obtaining the received signal, the radar needs to estimate a parameter of a target for the received signal. The parameter of the target may be an angle, a speed, or a range. According to different estimated parameters of the target, signal spectrums obtained by the receive end are classified into an angle spectrum, a speed measurement spectrum, and a ranging spectrum. Obtaining manners are as follows.

In a first obtaining manner, if a ranging spectrum needs to be obtained, for a digital signal obtained by each receive antenna, a ranging operation is performed to obtain a ranging spectrum corresponding to the transmit antenna of the radar. Optionally, each chirp signal received by the receive antenna is corresponding to one ranging spectrum. For example, the ranging operation is performing range-dimension fast Fourier transform (Fast Fourier Transform, FFT), also referred to as range FFT, on a chirp signal. Fast Fourier transform is a fast algorithm of discrete Fourier transform (Discrete Fourier Transform, DFT). Discrete Fourier transform is a form in which Fourier transform is discrete in both time domain and frequency domain, and is used to transform sampling of a time-domain signal into sampling in frequency domain of discrete-time Fourier transform (Discrete-time Fourier Transform, DTFT). A basic idea of fast Fourier transform is to decompose an original multi-point sequence into a series of short sequences.

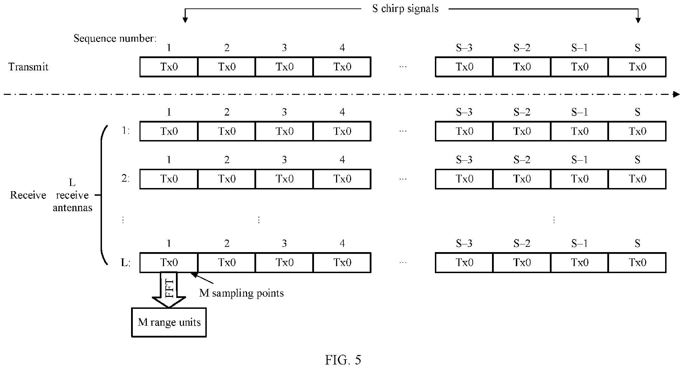

As shown in FIG. 5, it is assumed that a signal frame includes S chirp signals Tx0, where S is an integer greater than 1, and is usually an integral power of 2. It is assumed that for one chirp signal Tx0 obtained by each receive antenna, a corresponding digital signal includes sampling values of M sampling points. Then, a result of the fast Fourier transform is M pieces of data. In this case, the M pieces of data may be referred to as M range units (also referred to as range gates). The range unit is used to reflect a sampling interval in range, and the M range units are in a one-to-one correspondence with M ranges. In FIG. 5, a dimension in which a vertical direction is located is a fast-time dimension. A signal spectrum corresponding to the M range units is a ranging spectrum.

In a second obtaining manner, if a speed measurement spectrum needs to be obtained, after ranging spectrums are obtained, ranging spectrums corresponding to all chirp signals sent by a same transmit antenna are aligned based on range parameters, and then a speed measurement operation is performed to obtain a speed measurement spectrum (Doppler spectrum) corresponding to each range. For example, the speed measurement operation is a speed measurement slow-time dimension FFT (slow-FFT) operation. It should be noted that the speed measurement operation may alternatively be another operation. A specific algorithm of the speed measurement operation is not limited in this embodiment of this application.

That the ranging spectrums corresponding to all the chirp signals sent by the same transmit antenna are aligned based on the range parameters means that coordinate systems of the ranging spectrums corresponding to the chirp signals sent by the same transmit antenna are correspondingly overlapped, that is, the horizontal axes and the vertical axes are separately overlapped, so that origins are overlapped, and a range corresponding to the origin is 0. For example, refer to FIG. 5. For chirp signals Tx0 whose sequence numbers are 1 and that are transmitted by a transmit antenna in X sending periods and received by each receive antenna, the radar correspondingly overlaps coordinate systems of ranging spectrums of the X obtained chirp signals Tx0 whose sequence numbers are 1. Correspondingly, M range units of the ranging spectrums of the X chirp signals Tx0 whose sequence numbers are 1 are separately aligned, to obtain ranging spectrums whose range parameters are aligned and that correspond to the chirp signals Tx0 whose sequence numbers are 1. For example, X = 100, and M = 1000. In this case, ranging spectrums whose range parameters are aligned and that correspond to the chirp signals Tx0 whose sequence numbers are 1 are 100 ranging spectrums whose origins of 1000 range units are aligned.

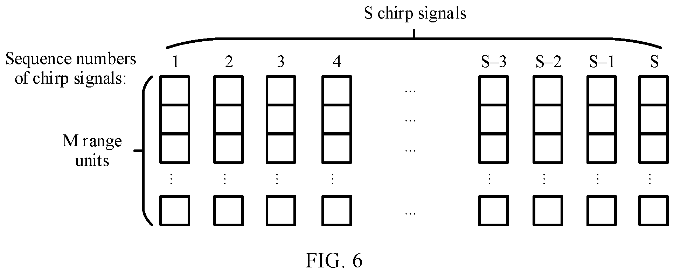

As shown in FIG. 6, for chirp signals of a signal frame length, that is, S chirp signals, after being aligned based on range parameters, ranging spectrums corresponding to the chirp signals are shown by corresponding columns in FIG. 6. One column represents a ranging spectrum whose range parameters are aligned and that corresponds to one chirp signal Tx0. Using a ranging spectrum whose range parameters are aligned and that corresponds to a chirp signal whose sequence number is 1 as an example (that is, a leftmost column in FIG. 6), the ranging spectrum whose range parameters are aligned includes M range units, each range unit is obtained by aligning range units of X ranging spectrums, and the M range units are in a one-to-one correspondence with the M ranges. In FIG. 6, a dimension in a horizontal direction is a slow-time dimension. Sampling points that belong to each ranging spectrum on a same range unit are referred to as slow-time sampling points or Doppler sampling points.

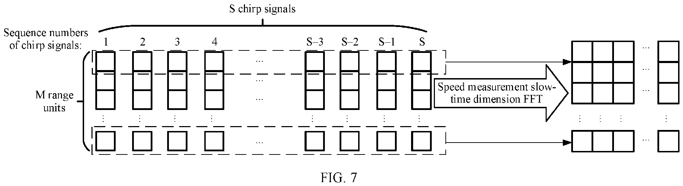

For example, a speed measurement spectrum obtained by executing a speed measurement slow-time dimension FFT (slow-FFT) operation on the ranging spectrum whose range parameters are aligned shown in FIG. 6 may be shown on a right side of FIG. 7. The M range units are in a one-to-one correspondence with the M speed measurement spectrums, and each speed measurement spectrum may be represented by a row of data on the right side of FIG. 7.

In a third obtaining manner, if an angle spectrum needs to be obtained, after a speed measurement spectrum corresponding to each range is obtained, the following processes are separately performed.

A1: Determine a range-Doppler map (Range-Doppler map, RD map for short) based on a correspondence between each range and the speed measurement spectrum, where each receive antenna is corresponding to one RD map.

A2: Execute a detection algorithm on the RD map to obtain a target RD cell (RD cell) on the RD map.

The target RD cell is an RD unit corresponding to the target, that is, the RD cell reflects the existing target. The detection algorithm is used to detect a target on the RD map, and the detection algorithm may be a constant false alarm rate (Constant False Alarm Rate, CFAR) algorithm. The CFAR algorithm is an algorithm that, during signal detection, when external interference intensity changes, a radar automatically adjusts its sensitivity to keep a false alarm probability unchanged.

There may be a plurality of manners of executing the detection algorithm on the RD map. In this embodiment of this application, the following two optional manners are used as examples for description.

In a first optional manner, the detection algorithm is separately executed for an RD map corresponding to each receive antenna to obtain the target RD cell on each RD map.

In a second optional manner, RD maps of the receive antennas are superimposed to obtain one RD map, and the detection algorithm is executed on the superimposed RD map to obtain the target RD cell on the RD map.

For example, it is assumed that the radar has L receive antennas, amplitudes of a same RD cell in RD maps of the L receive antennas are directly superimposed, to obtain a superimposed RD map. The detection algorithm is executed on the superimposed RD map, so that a quantity of times of executing the detection algorithm can be reduced, and a signal-to-noise ratio (signal-to-noise ratio, SNR) of an echo signal can be improved. It is worth noting that a same RD cell refers to RD units at a same location in the RD map.

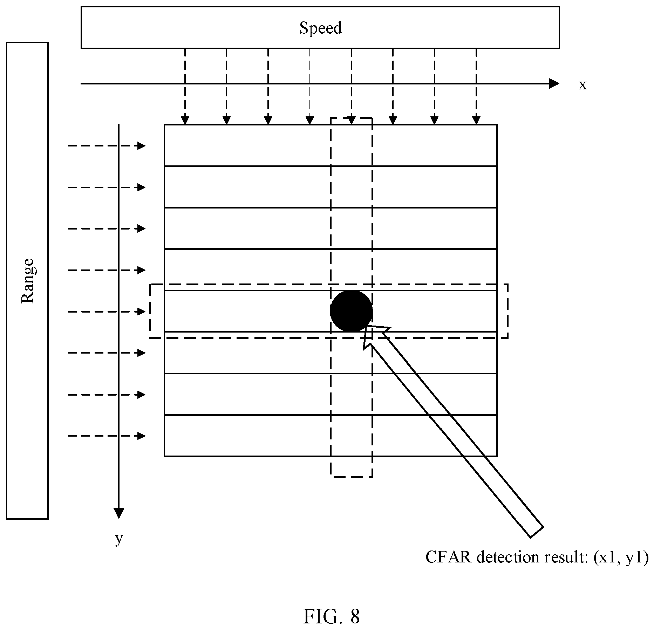

As shown in FIG. 7, a grid diagram on the right side of FIG. 7 is an example RD map. In the RD diagram, a vertical coordinate represents a range, a horizontal coordinate represents a speed, and the M range units respectively correspond to M different ranges. Each grid in FIG. 7 is an RD cell. Optionally, in the RD map, each RD cell may be uniquely indicated by using one RD sequence number. For example, one RD sequence number may include one speed measurement spectrum sequence number and one range sequence number. As shown in FIG. 8, FIG. 8 is a specific schematic diagram of the RD map shown on the right side of FIG. 7. For example, in FIG. 8, a vertical coordinate represents a range sequence number, and a horizontal coordinate represents a speed measurement spectrum sequence number (or referred to as a Doppler sequence number). It is assumed that an RD sequence number of each RD cell is represented as $(x, y)$. A horizontal coordinate value x is a speed measurement spectrum sequence number and is used to identify a speed measurement spectrum. A vertical coordinate value y is a range sequence number and is used to identify a range, that is, the foregoing range unit. In FIG. 8, it is assumed that an RD cell in which a black dot is located corresponds to one target, that is, a target RD cell. After CFAR detection is performed on the target RD cell, an RD sequence number of the target RD cell is $(x1, y1)$, indicating that a speed measurement spectrum sequence number is x1 and a range sequence number is y1.

A3: Execute an angle estimation algorithm for a same target RD cell of all receive antennas to obtain an angle spectrum, where one angle spectrum corresponds to the same target RD cell of all receive antennas.

The executing an angle estimation algorithm for a same target RD cell of all receive antennas refers to executing the angle estimation algorithm based on corresponding range and speed measurement spectrum of the same target RD cell of all receive antennas. As shown in FIG. 8, the angle estimation algorithm may be executed by using range sequence number and Doppler sequence number that correspond to the same target RD cell of all receive antennas. For example, the angle estimation algorithm is an angle of arrival (Angle of Arrival, AOA) estimation algorithm, also referred to as a direction of arrival (Direction of Arrival, DOA) estimation algorithm, and a corresponding angle spectrum is also referred to as an AOA spectrum. For example, the AOA estimation algorithm may be a digital beamforming (Digital beam-forming, DBF) algorithm, an FFT algorithm, or a DFT algorithm. A signal for which the AOA estimation algorithm is used is a signal vector formed by the same RD cell of each receive antenna.

Optionally, for a TDM-MIMO radar, before the angle estimation algorithm is executed for the same target RD cell of all receive antennas to obtain the angle spectrum, because transmit antennas have different transmission moments, Doppler phase compensation needs to be performed on the RD cells received by the receive antennas based on a transmission interval of each transmit antenna, to eliminate a Doppler phase deviation caused by different transmission moments of the transmit antennas.

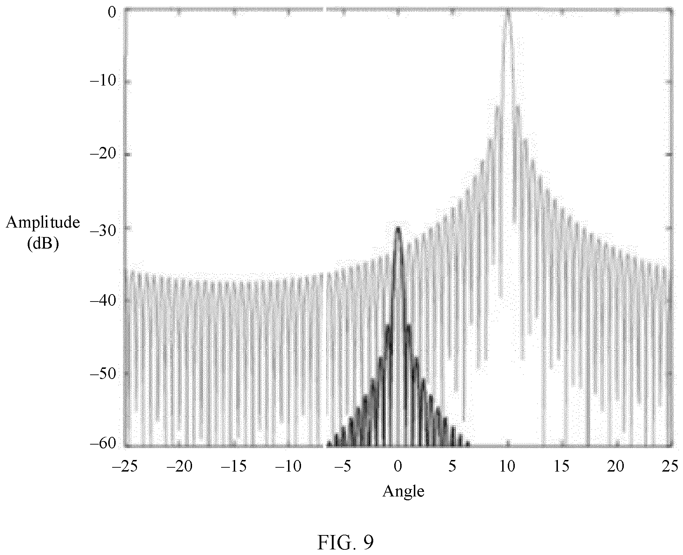

FIG. 9 is a schematic diagram of an AOA spectrum according to an embodiment of this application. A horizontal axis of the AOA spectrum represents an angle in a unit of degree, and a vertical axis represents an amplitude (amplitude), also referred to as an amplitude, in a unit of dB (decibel). FIG. 9 shows an example of a scenario in which a weak-signal target (a target at a position of 0°) is overwhelmed by a side lobe of a strong-signal target (a target at a position of 12.5°).

S303: Determine, based on the signal spectrum, a parameter of a target that is greater than or equal to a signal strength threshold.

In this embodiment of this application, signal strength of the target may be represented in a plurality of manners. In an optional manner, the signal strength of the target may be represented by an amplitude of a signal in the signal spectrum. In another optional manner, the signal strength of the target may be represented by a square of the amplitude of the signal in the signal spectrum. The signal strength of the target may alternatively be represented in another manner. Any simple transformation or equivalent modification made based on this application should fall within the protection scope of this application. Therefore, details are not described again.

In this embodiment of this application, the signal strength threshold may be a fixed value or a variable value. If the signal strength threshold is a fixed value, the signal strength threshold may be set based on an application scenario of a target identification method of a radar. For example, there are one or more known targets with high signal strength in an environment near the radar, and the known target is a target that does not need to be identified, and causes interference to a target that needs to be identified. In this case, the signal strength threshold may be set based on the signal strength corresponding to the known target, to eliminate the known target from the signal spectrum in a subsequent process. If the signal strength threshold is a variable value, the signal strength threshold may be dynamically set based on an application scenario of a target identification method of a radar. For example, a signal strength threshold R meets a signal strength setting formula: $R = E - T$, where E is a maximum signal strength value in a current signal spectrum, and T is a preset strength value. The maximum signal strength value M is updated as the signal spectrum is updated.

Optionally, the radar determines the parameter of the target based on a received signal corresponding to a target that is in the signal spectrum and that is greater than or equal to the signal strength threshold. For example, the target that is in the signal spectrum and that is greater than or equal to the signal strength threshold is a target with highest signal strength in the signal spectrum. That is, the foregoing signal strength setting formula meets $R = E$, that is, $T = 0$.

In this embodiment of this application, the radar may perform one or more target detection procedures, and each target detection procedure is used to identify the target that is in the signal spectrum and that is greater than or equal to the signal strength threshold. For example, when the target that is in the signal spectrum and that is greater than or equal to the signal strength threshold is the target with highest signal strength in the signal spectrum, one target or no target exists by default in each target identification process. Therefore, if a target is obtained through detection, a received signal corresponding to the target continues to be identified.

For different signal spectrums, a parameter of an estimated target may be represented in a plurality of manners. For example, for a ranging spectrum, a parameter of an estimated target is a range, and is represented by a range value corresponding to the target that is in the ranging spectrum and that is greater than or equal to a signal strength threshold. When the target that is in the ranging spectrum and that is greater than or equal to the signal strength threshold is a target with highest signal strength in the ranging spectrum, the parameter of the target is represented by the range value at the maximum amplitude in the ranging spectrum. For a speed measurement spectrum, a parameter of an estimated target is a speed, and is represented by a speed value corresponding to the target that is greater than or equal to a signal strength threshold. When the target that is in the speed measurement spectrum and that is greater than or equal to the signal strength threshold is a target with highest signal strength in the speed measurement spectrum, the parameter of the target is represented by the speed value at the maximum amplitude in the speed measurement spectrum. For an angle spectrum, a parameter of an estimated target is an angle, and is represented by an angle value corresponding to the target that is in the angle spectrum and that is greater than or equal to a signal strength threshold. When the target that is in the angle spectrum and that is greater than or equal to the signal strength threshold is a target with highest signal strength in the angle spectrum, the parameter of the target is represented by the angle value at the maximum amplitude in the angle spectrum. As shown in FIG. 9, when a target that is in the angle spectrum and that is greater than or equal to a signal strength threshold is a target with highest signal strength in the angle spectrum, an angle value output by the radar is 12.5° in a first target detection procedure, and an angle value output by the radar is 0° in a second target detection procedure.

After determining the parameter of the target, the radar may output a detection result, where the detection result includes a range, a speed, and/or an angle corresponding to the target.

S304: Reconstruct a received signal corresponding to the target that is in the signal spectrum and that is greater than or equal to the signal strength threshold.

For ease of understanding by readers, the following briefly describes a principle of target identification in embodiments of this application. It is assumed that a radar (for example, a MIMO radar or a SIMO radar) has L receive antennas in total. For a same target RD cell corresponding to the L receive antennas, received signals that are of K targets and that are on the L receive antennas, that is, received signals corresponding to the target RD cell, may be represented as:

$$\mathbf{y} = \sum_{i=1}^{K} a_i e^{j\frac{2\pi\mathbf{d}}{\lambda}\sin\theta_i + j\phi_i} \qquad \text{(formula 1)}$$

In this formula, $L \geq 1$, $K \geq 1$, $a_i$ represents an amplitude of an $i^{th}$ target, $1 \leq i \leq K$, and $\mathbf{d} = [d_1, d_2, d_3, ..., d_L]^T$ is a location vector of the receive antenna, that is, a location of each array element in an antenna array including the receive antennas. An element $d_p, p = 1, 2, ..., L$ indicates a position of a $p^{th}$ receive antenna. $\theta_i$ represents an angle of the $i^{th}$ target, for example, an AOA. $\phi_i$ represents an initial phase (also referred to as an initial phase) of the $i^{th}$ target. A symbol T represents calculating vector transposition. $e^{j\frac{2\pi\mathbf{d}}{\lambda}\sin\theta_i + j\phi_i}$ represents a steering vector (steering vector) corresponding to the ith target. For example, $e^{j\frac{2\pi\mathbf{d}}{\lambda}\sin\theta_1 + j\phi_1}$ represents a steering vector corresponding to a first target.

Alternatively, for a same target RD cell of L receive antennas, received signals that are of K targets and that are on the L receive antennas may be:

$$\mathbf{y} = a_1 e^{j\frac{2\pi\mathbf{d}}{\lambda}\sin\theta_1 + j\phi_1} + a_2 e^{j\frac{2\pi\mathbf{d}}{\lambda}\sin\theta_2 + j\phi_2} + ... + a_K e^{j\frac{2\pi\mathbf{d}}{\lambda}\sin\theta_K + j\phi_K} \qquad \text{(formula 2)}$$

In this formula, $L \geq 1$, $K \geq 1$, $a_i$ represents an amplitude of an $i^{th}$ target, $1 \leq i \leq K$, and $d = [d_1, d_2, d_3, ..., d_L]^T$ is a location vector of the receive antenna. An element $d_p$, $p = 1, 2, ..., L$ indicates a position of a $p^{th}$ receive antenna. $\theta_i$ represents an angle of the $i^{th}$ target. for example, an AOA. $\phi_i$ represents an initial phase of the $i^{th}$ target. A symbol T represents vector transposition. $e^{j\frac{2\pi\mathbf{d}}{\lambda}\sin\theta_i + j\phi_i}$ represents a steering vector corresponding to the ith target. For example, $e^{j\frac{2\pi\mathbf{d}}{\lambda}\sin\theta_1 + j\phi_1}$ represents a steering vector corresponding to a first target.

In a process of obtaining an angle spectrum, an angle corresponding to each receive antenna needs to be obtained based on a rule of phases of sampling points of the L receive antennas at a same moment, where a steering vector is used to describe the rule of phases of sampling points of the L receive antennas at a same moment, and each element in the steering vector represents a phase of a sampling point corresponding to an antenna at a same moment.

In this embodiment of this application, an antenna array including receive antennas of a radar may be a non-uniform antenna array, for example, a sparse array (sparse array). Alternatively, an antenna array including receive antennas of the radar may be a uniform linear array (Uniform Linear Array, ULA). For example, an antenna array including receive antennas of the radar is a ULA. In formula 1 and formula 2, $\mathbf{d}$ may represent a vector: $[0, d_0, 2d_0, ..., (L-1)d_0]^T$, $d_0 = q\frac{\lambda}{2}$, $\lambda$ is a signal wavelength, $q$ is a preset proportional scaling coefficient, and L is a quantity of receive antennas of the radar, such as a quantity of physical receive antennas in a SIMO radar or a quantity of virtual receive antennas in a MIMO radar. The signal wavelength refers to a wavelength of a signal transmitted by a transmit antenna. $q$ is used to adjust a field of view. For example, $0.9 \leq q \leq 1.1$, and usually, $q = 1$.

It can be learned from the foregoing formula 1 or formula 2 that, for a same target RD cell of L receive antennas, received signals that are of the K targets and that are on the L receive antennas may be represented as a sum of received signals corresponding to the K targets. Similarly, received signals that are of the K targets and that are on the L receive antennas in a speed measurement spectrum and a ranging spectrum may also be represented as a sum of received signals corresponding to the K targets. If strength of a received signal corresponding to a first target is high, identification of a received signal corresponding to a second target by a radar is affected, that is, a problem of "the strong overwhelms the weak" occurs, the received signal corresponding to the first target may be reconstructed, and the received signal corresponding to the first target may be eliminated from received signals, to avoid interference to the received signal corresponding to the second target. If there are a plurality of targets in an identification range of the radar, one or more target identification procedures may be performed. In each target identification procedure, a received signal corresponding to a target greater than or equal to a signal strength threshold is obtained through identification, for example, a received signal corresponding to a target with highest signal strength, and the received signal obtained through identification is eliminated from the received signals corresponding to the signal spectrum, to achieve precise identification of a plurality of targets. The procedure may be referred to as a serial interference elimination procedure.

During actual implementation of this embodiment of this application, a received signal corresponding to a target that is in the signal spectrum and that is greater than or equal to a signal strength threshold needs to be reconstructed, to eliminate the reconstructed received signal. A process of reconstructing a received signal of a target greater than or equal to a signal strength threshold includes a following step.

Because the radar may determine a parameter of a target that is in the signal spectrum and that is greater than or equal to a signal strength threshold, the radar may determine another parameter of the signal spectrum based on the parameter of the target that is in the signal spectrum and that is greater than or equal to the signal strength threshold. The another parameter includes: one or more of an amplitude value corresponding to the target in the signal spectrum, a sequence number corresponding to the amplitude value, and a phase corresponding to the amplitude value. The another parameter is a parameter required for reconstructing the received signal corresponding to the target greater than or equal to the signal strength threshold. After obtaining the another parameter of the signal spectrum, the radar may reconstruct, based on the another parameter of the signal spectrum, the received signal corresponding to the target.

For example, when the target that is in the signal spectrum and that is greater than or equal to the signal strength threshold is a target with highest signal strength in the signal spectrum, the another parameter corresponding to the reconstructed received signal $y_A$ includes one or more of a maximum amplitude value A of the signal spectrum, a sequence number corresponding to the maximum amplitude value A, and a phase $\varphi_A$ corresponding to the maximum amplitude value A.

S305: Eliminate a reconstructed received signal in the signal spectrum to obtain an updated signal spectrum, where the updated signal spectrum represents a signal spectrum that does not include the target.

It should be noted that the target that is not included in the updated signal spectrum is the target that is determined based on the signal spectrum in S303 and that is greater than or equal to the signal strength threshold. The target is eliminated from the signal spectrum through a subsequent signal elimination operation.

For example, the radar may preset an elimination condition. When the signal spectrum meets the elimination condition, the reconstructed received signal is eliminated in the signal spectrum, to obtain an updated signal spectrum. The elimination condition includes at least one of the following:

an amplitude of the target that is in the signal spectrum and that is greater than or equal to the signal strength threshold is less than an amplitude threshold;
a peak-to-average ratio of the target that is in the signal spectrum and that is greater than or equal to the signal strength threshold is less than a peak-to-average ratio threshold; and
a quantity of times of eliminating a reconstructed received signal after the signal spectrum is obtained is less than a quantity-of-times threshold.

The amplitude threshold, the peak-to-average ratio threshold, and the quantity-of-times threshold may all be preset thresholds. The amplitude threshold may be an amplitude value corresponding to a smallest object that can be detected by the radar, and is related to detection precision of the radar.

It should be noted that, when the signal spectrum does not meet the elimination condition, the signal elimination operation may not be performed, or the action is stopped. The signal elimination operation is an operation of eliminating, from received signals corresponding to the signal spectrum, a received signal corresponding to an identified target that is greater than or equal to the signal strength threshold. For example, if the elimination condition includes that an amplitude of the target that is in the signal spectrum and that is greater than or equal to the signal strength threshold is less than an amplitude threshold, that the signal spectrum does not meet the elimination condition indicates that there is no signal whose amplitude is less than the amplitude threshold in the signal spectrum. If the elimination condition includes that a peak-to-average ratio of the target that is in the signal spectrum and that is greater than or equal to the signal strength threshold is less than a peak-to-average ratio threshold, that the signal spectrum does not meet the elimination condition indicates that there is no signal whose peak-to-average ratio is less than the peak-to-average ratio threshold in the signal spectrum. If the elimination condition includes that a quantity of times of eliminating a reconstructed received signal after the signal spectrum is obtained is less than a quantity-of-times threshold, that the signal spectrum does not meet the elimination condition indicates that the quantity of times of eliminating the reconstructed received signal reaches an upper limit of the quantity of times. When the signal spectrum does not meet the elimination condition, further performing the signal elimination operation easily affects final detection precision. Therefore, impact on detection precision can be avoided by setting an elimination condition. It should be noted that the radar may set, in specified storage space, a counter for a quantity of times of eliminating the reconstructed received signal. After the signal spectrum is obtained for the first time, the quantity of times of eliminating the reconstructed received signal may be initialized to 0. Each time after the reconstructed received signal is eliminated, the quantity of times of eliminating the reconstructed received signal is updated once. When detecting whether the signal spectrum meets the elimination condition, the radar obtains the quantity of times from the specified storage space.

In S305, the radar may determine a difference between the received signal corresponding to the signal spectrum and the reconstructed received signal as a signal corresponding to the updated signal spectrum, and determine the updated signal spectrum based on the signal corresponding to the updated signal spectrum. The process may include the following steps.

B1: Obtain a received signal y corresponding to a signal spectrum F.

The signal spectrum F is obtained by processing the received signal obtained by the radar. When the signal spectrum is obtained by the radar by processing the signal received by the receive antenna, the received signal y corresponding to the signal spectrum F is a received signal that describes the signal spectrum and that is obtained by processing a received initial signal, that is, an initial received signal on which no signal elimination operation is performed. When the signal spectrum F is an intermediate signal obtained by performing at least one signal elimination operation on the initial received signal, the received signal corresponding to the signal spectrum F is the intermediate signal.

Optionally, when the received signal corresponding to the signal spectrum F is a received signal y obtained by processing the initial signal, after the radar performs steps 301 and 302, the radar may store the received signal y, and directly obtain the stored received signal y when performing B1.

When the received signal corresponding to the signal spectrum F is an intermediate signal y, the radar may record the obtained intermediate signal each time after performing a signal elimination operation, and directly obtain the stored intermediate signal y when performing B1 again.

B2: Determine a difference between the received signal y corresponding to the signal spectrum F and the reconstructed received signal $y_A$ as a signal corresponding to the updated signal spectrum.

As described in S304, the radar performs subtraction between the received signal y corresponding to the signal spectrum F and the reconstructed received signal $y_A$ based on other determined parameters of the signal spectrum and the reconstructed received signal $y_A$, to obtain the signal corresponding to the updated signal spectrum.

B3: Determine the updated signal spectrum based on the signal corresponding to the updated signal spectrum.

After obtaining the received signal corresponding to the updated signal spectrum, the radar may obtain the updated signal spectrum by processing the signal. For a process of obtaining the updated signal, refer to the process of obtaining the signal spectrum based on the received signal of the receive antenna of the radar in S302. For example, it is assumed that the received signal corresponding to the signal spectrum is a first signal, and the received signal corresponding to the updated signal spectrum is a second signal. In this case, the signal spectrum and the updated signal spectrum are obtained by processing the first signal and the second signal by using a same processing procedure, and the first signal and the second signal belong to a same signal domain. Details are not described in this embodiment of this application.

S306: Determine, in the updated signal spectrum, a parameter of a target that is greater than or equal to the signal strength threshold.

Optionally, the radar determines the parameter of the target based on the target that is in the updated signal spectrum and that is greater than or equal to the signal strength threshold. Optionally, the target that is in the signal spectrum and that is greater than or equal to the signal strength threshold is a target with highest signal strength in the signal spectrum. Corresponding to a ranging spectrum, a speed measurement spectrum, and an angle spectrum, the parameter of the target may be a range, a speed, and an angle of the target respectively. For a process of determining the parameter of the target that is in the signal spectrum and that is greater than or equal to the signal strength threshold, refer to S303. Details are not described in this embodiment of this application.

S307: Repeatedly reconstruct a received signal corresponding to a target that is in the signal spectrum and that is greater than or equal to the signal strength threshold, and determine, in the updated signal spectrum, a parameter of a target that is greater than or equal to the signal strength threshold.

Optionally, when the updated signal spectrum meets the elimination condition, the process of reconstructing the received signal corresponding to the target that is in the signal spectrum and that is greater than or equal to the signal strength threshold and determining, in the updated signal spectrum, the parameter of the target that is greater than or equal to the signal strength threshold is repeatedly performed, until the updated signal spectrum does not meet the elimination condition. That is, when the updated signal spectrum meets the elimination condition, S304 and S305 (that is, the foregoing target identification procedure) are repeated until the updated signal spectrum does not meet the elimination condition, and then the action is stopped.

S308: Obtain at least one of location information or speed information of the determined target based on the determined parameter of the target.

After obtaining the parameter of the target, the radar may determine at least one of the location information or the speed information of the target based on the obtained parameter. The parameter of the target includes at least one of an angle, a speed, or a range. The location information may include a location coordinate in a specified three-dimensional coordinate system (for example, an earth coordinate system), and the speed information may include a speed of the target relative to the radar (that is, a relative speed of the target) and/or an absolute speed of the target (that is, an actual speed of the target). For example, the radar may map the target to the specified three-dimensional spatial coordinate system based on a range between the target and the radar (that is, an angle obtained by using the foregoing ranging spectrum) and an angle between the target and the radar (that is, an angle obtained by using the foregoing angle spectrum), to form a radar point cloud (Point Cloud). An accurate position coordinate of the target is determined based on the radar point cloud.

It should be noted that before S304, the radar may further detect whether the signal spectrum meets the elimination condition. When the signal spectrum does not meet the elimination condition, it indicates that no target exists in the signal spectrum, and the action is stopped, that is, execution of S304 is stopped. When the signal spectrum meets the elimination condition, S304 is performed. In this way, an unnecessary calculation process can be reduced.

It should be noted that, in the foregoing embodiment, the target detection method performed by the radar is described by using an example in which the radar presets the elimination condition. In actual implementation of this embodiment of this application, the radar may not preset the elimination condition, and may start or stop execution of the target detection method in another manner. For example, after a target detection instruction is received, execution of the target detection method starts, for example, one or more steps of S301 to S308 are performed. For another example, after a detection end instruction is received, execution of the target detection method stops, for example, the signal elimination operation is not performed, and the action is stopped.

In addition, a sequence of steps of the network coding method provided in this embodiment of this application may be properly adjusted, and steps may also be correspondingly added or deleted based on a situation. For example, because signal spectrums in S303 and S306 are different, correspondingly determined targets are also different. As described in 303, signal strength thresholds in S303 and S306 may be the same or may be different. In this embodiment of this application, each time a target greater than or equal to the signal strength threshold is determined, a parameter of the target may be determined. That is, S303 and S306 are sequentially performed. Alternatively, after all targets are determined, parameters of the determined targets may be obtained. That is, S303 and S306 are performed simultaneously or separately after the radar detects that the signal spectrum meets the elimination condition. Any variation method readily figured out by a person skilled in the art within the technical scope disclosed in this application shall fall within the protection scope of this application. Therefore, details are not described.

In conclusion, according to the target detection method provided in this embodiment of this application, the received signal corresponding to the target that is in the signal spectrum and that is greater than or equal to the signal strength threshold is reconstructed, and the reconstructed received signal is eliminated from the signal spectrum. This avoids interference of the eliminated received signal (strong target signal) to the determining of a parameter of another target (weak target signal) in the signal spectrum. and avoids a problem of "the strong overwhelms the weak". Especially, when the target that is in the signal spectrum and that is greater than or equal to the signal strength threshold is the target with highest signal strength in the signal spectrum, interference caused by the target with highest signal strength in the signal spectrum to another target can be avoided, a problem of "the strong overwhelms the weak" can be effectively avoided, and detection precision of the another target can be further improved.

In this embodiment of this application, as described in S302, the signal spectrum may be obtained in a plurality of manners, for example, obtained based on a DBF algorithm or obtained based on a Fourier transform algorithm. For signal spectrums obtained in different obtaining manners, signal reconstruction manners in the foregoing S304 are also different. In this embodiment of this application, an example in which the target that is in the signal spectrum and that is greater than or equal to the signal strength threshold is the target with highest signal strength in the signal spectrum is used for description by using the following several optional examples.

In an optional example, after it is determined that the signal spectrum is obtained based on the DBF algorithm, an amplitude of each element of the reconstructed received signal is equal to a preset multiple of a maximum amplitude value of the signal spectrum, and an initial phase of the reconstructed received signal is equal to a phase corresponding to the maximum amplitude value. In this case, it is assumed that the target with highest signal strength in formula 1 or formula 2 is the first target, and an amplitude $a_1$ of the first target meets:

$$a_1 = \beta A \qquad\qquad\qquad (\text{formula } 3)$$

In this formula, A is a maximum amplitude value of the signal spectrum F, and $\beta$ is a preset value.

In the DBF algorithm, $\beta$ meets: $\beta = 1/L$, $\arg(\mathbf{y}_A) = \varphi_A$, and $\varphi_A = \arg(F(A))$. $\varphi_A$ represents an initial phase of the target with the highest signal strength on each receive antenna. Because the DBF algorithm does not change a group delay of an output signal spectrum, $\varphi_A$ is equal to a phase at a maximum amplitude of the signal spectrum F, that is, a phase corresponding to the maximum amplitude value A. F(A) represents the target with the highest signal strength in the signal spectrum F, and $\mathbf{y}_A = \beta A e^{j2\pi f_A t} e^{j\varphi_A}$, where $f_A$ represents a frequency of a transmitted signal, and $t$ represents time.

In another optional example, after it is determined that the signal spectrum is obtained based on the Fourier transform algorithm, the reconstructed received signal $\mathbf{y}_A$ is equal to a product of the proportional scaling coefficient $\alpha$ and inverse Fourier transform of a first signal spectrum $\overline{F}$, the first signal spectrum $\overline{F}$ and the signal spectrum F have an equal length, and a value of another point in the first signal spectrum $\overline{F}$ other than a point having a same location, amplitude, and phase as a point at which a maximum amplitude value of the signal spectrum F is located is 0. That the first signal spectrum $\overline{F}$ and the signal spectrum F have an equal length means that the first signal spectrum $\overline{F}$ and the signal spectrum F have an equal length in a signal domain corresponding to Fourier transform.

The Fourier transform algorithm may be an FFT algorithm or a DFT algorithm. Correspondingly, when the Fourier transform algorithm is the FFT algorithm, the inverse Fourier transform is inverse discrete Fourier transform (Inverse Fast Fourier Transform, IFFT); or when the Fourier transform algorithm is the DFT algorithm, the inverse Fourier transform is inverse discrete Fourier transform (Inverse Discrete Fourier Transform, IDFT). In this embodiment of this application, the following two aspects are separately used for description.

In a first aspect, after it is determined that the signal spectrum is obtained based on the FFT algorithm, the reconstructed received signal $\mathbf{y}_A$ is equal to a product of the proportional scaling coefficient $\alpha$ and IFFT of the first signal spectrum $\overline{F}$, the first signal spectrum $\overline{F}$ and the signal spectrum F have an equal length, and a value of another point in the first signal spectrum $\overline{F}$ other than a point having a same location, amplitude, and phase as a point at which a maximum amplitude value of the signal spectrum F is located is 0.

For example, the reconstructed received signal $\mathbf{y}_A$ is represented as:

$$\mathbf{y}_A = \alpha \cdot \mathrm{IFFT}(\overline{F}) \qquad\qquad\qquad \text{(formula 4)}$$

In this formula, $\alpha$ is the preset proportional scaling coefficient, the first signal spectrum $\overline{F}$ and the signal spectrum F have an equal length, and a value of another point in the first signal spectrum $\overline{F}$ other than a point having a same location, amplitude, and phase as a point at which a maximum amplitude value of the signal spectrum F is located is 0.

In a second aspect, after it is determined that the signal spectrum is obtained based on the DFT algorithm, the reconstructed received signal $\mathbf{y}_A$ is equal to a product of the proportional scaling coefficient $\alpha$ and IDFT of the first signal spectrum $\overline{F}$, the first signal spectrum $\overline{F}$ and the signal spectrum F have an equal length, and a value of another point in the first signal spectrum $\overline{F}$ other than a point having a same location, amplitude, and phase as a point at which a maximum amplitude value of the signal spectrum F is located is 0.

For example, the reconstructed received signal $\mathbf{y}_A$ is represented as:

$$\mathbf{y}_A = \alpha \cdot \mathrm{IDFT}(\overline{F}) \qquad\qquad\qquad \text{(formula 5)}$$

In this formula, $\alpha$ is the preset proportional scaling coefficient, the first signal spectrum $\overline{F}$ and the signal spectrum F have an equal length, and a value of another point in the first signal spectrum $\overline{F}$ other than a point having a same location, amplitude, and phase as a point at which a maximum amplitude value of the signal spectrum F is located is 0.

Further, as described above, the signal spectrum may be an angle spectrum, a speed measurement spectrum, or a ranging spectrum. For different signal spectrums, procedures of the target detection method are also different. In this embodiment of this application, examples in which the signal spectrum is an angle spectrum or a ranging spectrum are separately used to describe the target detection method in the following two optional implementations.

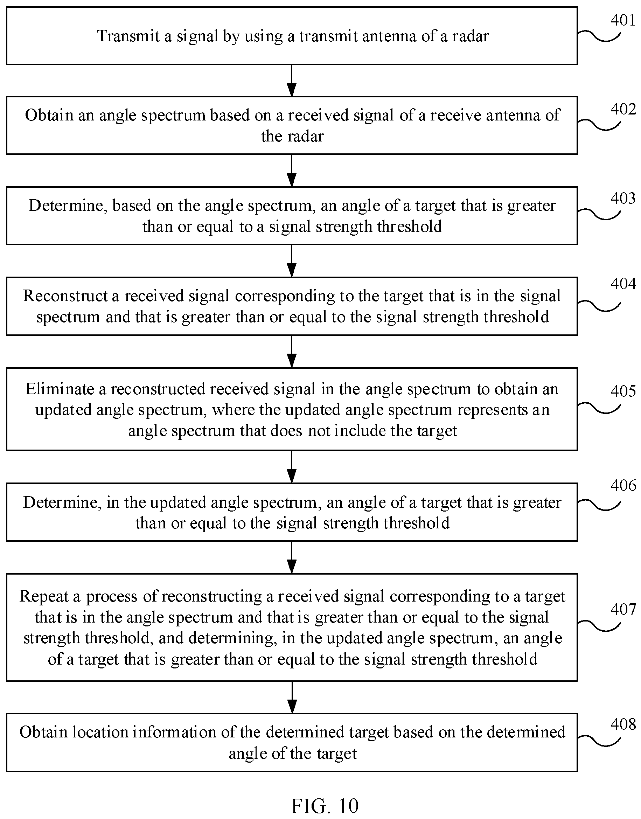

In a first optional implementation, the signal spectrum is an angle spectrum. As shown in FIG. 10, the target detection method includes the following steps.

S401: Transmit a signal by using a transmit antenna of a radar.

For S401, refer to S301. Details are not described in this embodiment of this application.

S402: Obtain an angle spectrum based on a received signal of a receive antenna of the radar.

For a process of obtaining the angle spectrum in S402, refer to S302.

S403: Determine, based on the angle spectrum, an angle of a target that is greater than or equal to a signal strength threshold.

For the angle spectrum, a parameter of the target is an angle. When the target that is in the angle spectrum and that is greater than or equal to the signal strength threshold is a target with highest signal strength in the angle spectrum, because an amplitude at a position with highest signal strength in the angle spectrum is also the maximum, an angle $\theta_A$ at the position with the highest signal strength is equal to an angle at the position with a maximum amplitude in the angle spectrum, and can be represented by an angle value at the position with the maximum amplitude in the angle spectrum. After determining the angle of the target greater than or equal to the signal strength threshold, the radar may output a detection result to indicate the angle of the target. For example, the detection result includes the angle value at the position with the maximum amplitude.

S404: Reconstruct a received signal corresponding to the target that is in the signal spectrum and that is greater than or equal to the signal strength threshold.

It is assumed that an angle estimation algorithm is performed for a received signal y corresponding to a same target RD cell determined by an antenna array of a radar, an obtained angle spectrum is a complex number spectrum $S(\theta) = T(y)$, where $T(\cdot)$ represents an operation function or transformation used to calculate the angle spectrum for the signal y, that is, the foregoing angle estimation algorithm. The algorithm may be a DBF algorithm, a DFT algorithm, an FFT algorithm, or the like. A parameter that is estimated by using the angle estimation algorithm and that is of the target greater than or equal to the signal strength threshold, is an angle. For example, it is assumed that an angle that is estimated by using the angle estimation algorithm and that is of a target with the highest signal strength (that is, a target corresponding to the reconstructed received signal in this embodiment of this application) is $\theta_A$. In this case, the radar may reconstruct, by using the angle $\theta_A$, the received signal corresponding to the target greater than or equal to the signal strength threshold.

As described in S303, each receive antenna corresponds to one RD map, and one RD cell of the L receive antennas corresponds to one angle spectrum. In this embodiment of this application, for each angle spectrum, received signals corresponding to targets greater than or equal to the signal strength threshold are reconstructed in a same manner. In subsequent embodiments of this application, a received signal reconstruction manner of one angle spectrum is used as an example for description, for a reconstruction manner of another angle spectrum, refer to the received signal reconstruction manner of the angle spectrum. The following several examples are used for description in this embodiment of this application.

In a first optional example, after it is determined that the angle estimation algorithm is the DBF algorithm, the obtained angle spectrum F may be represented as $S(\theta) = \mathbf{y}^H\mathbf{a}(\theta)$. y indicates a signal obtained by the radar. When the signal spectrum is obtained by the radar through processing the initial signal received by the receive antenna, the received signal y corresponding to the signal spectrum F is a received signal that describes the signal spectrum and that is obtained by processing the received initial signal, that is, an initial received signal on which no signal elimination operation is performed. When the angle spectrum F is obtained by processing an intermediate signal obtained by performing at least one signal elimination operation on the initial received signal, y is the intermediate signal, H represents conjugate transpose, $\mathbf{a}(\theta) = e^{j\frac{2\pi\mathbf{d}}{\lambda}\sin\theta}$ and represents a phase of the angle spectrum F. For example, in S402, d = $[d_1, d_2, d_3, ..., d_L]^T$ and is a position vector of the receive antenna.

For example, the radar determines another parameter of the angle spectrum based on the angle of the target that is in the angle spectrum and that is greater than or equal to the signal strength threshold, where the another parameter includes an amplitude value corresponding to the target in the angle spectrum and a phase corresponding to the amplitude value; and reconstructs, based on the another parameter of the angle spectrum, the received signal corresponding to the target.

For example, when the target that is in the angle spectrum and that is greater than or equal to the signal strength threshold is the target with the highest signal strength in the angle spectrum, for the target with the highest signal strength in the angle spectrum, by using the foregoing formula 3, the received signal corresponding to the target may be reconstructed as:

$$\mathbf{y}_A = \beta A e^{j(\frac{2\pi\mathrm{d}\sin(\theta_A)}{\lambda}+\varphi_A)} \qquad\qquad \text{(formula 6)}$$

In this formula, $\mathbf{d} = [d_1, d_2, d_3, ..., d_L]^T$ is a position vector of the receive antenna, and $\lambda$ is wavelength of the signal.

$\theta_A$ is the angle corresponding to the target with the highest signal strength in the angle spectrum $S(\theta)$, and A is a maximum amplitude value of the amplitude $|S(\theta)|$ in the complex number spectrum $S(\theta)$, that is, A = $|S(\theta_A)|$, where $|*|$ represents calculating an amplitude, $\varphi_A$ = arg($S(\theta_A)$) and is a phase corresponding to the maximum amplitude value A in the angle spectrum F. The radar may first determine, based on the angle spectrum F, an angle $\theta_A$ (that is, the angle corresponding to the target with the highest signal strength) corresponding to the maximum amplitude value, and then determine, based on the angle $\theta_A$ corresponding to the maximum amplitude value, a phase of the target corresponding to the maximum amplitude value A. In this way, other parameters, A and $\varphi_A$, are obtained through estimation based on $S(\theta_A)$.

Further, for each receive antenna, it is assumed that $\beta$ = 1/L. The complex number signal spectrum $S(\theta_A) = \mathbf{y}^H\mathbf{a}(\theta_A)$ corresponding to the reconstructed received signal and the determined A and $\varphi_A$ are substituted into formula 6, and the reconstructed received signal is obtained as follows:

$$\mathbf{y}_A = \frac{|\mathbf{y}^H\mathbf{a}(\theta_A)|}{L} e^{j(\frac{2\pi\mathrm{d}\sin(\theta_A)}{\lambda}+\arg(\mathbf{y}^H\mathbf{a}(\theta_A)))} = \frac{A}{L} e^{j(\frac{2\pi\mathrm{d}\sin(\theta_A)}{\lambda}+\arg(\mathbf{y}^H\mathbf{a}(\theta_A)))} \qquad \text{(formula 7)}$$

In this formula, L represents a quantity of receive antennas, and d = $[d_1, d_2, d_3, ..., d_L]$T is a vector formed by locations of the L receive antennas, that is, represents a location of each array element in an antenna array formed by the receive antennas.

In a second optional example, after it is determined that the angle estimation algorithm is an FFT algorithm, the reconstructed received signal $\mathbf{y}_A$ is equal to a product of the proportional scaling coefficient $\alpha$ and IFFT of the first signal spectrum $\overline{F}$, the first signal spectrum $\overline{F}$ and the signal spectrum F have an equal length, and a value of another point in the first signal spectrum $\overline{F}$ other than a point having a same location, amplitude, and phase as a point at which a maximum amplitude value of the signal spectrum F is located is 0. For example, the point at which the maximum amplitude value of the signal spectrum F is located may be determined, and a point other than the point at which the maximum amplitude value of the signal spectrum F is located is set to 0, to obtain the first signal spectrum $\overline{F}$.

For example, the radar determines another parameter of the angle spectrum based on the angle of the target that is in the angle spectrum and that is greater than or equal to the signal strength threshold, where the another parameter includes an amplitude value corresponding to the target in the angle spectrum, a sequence number corresponding to the amplitude value, and a phase corresponding to the amplitude value; and reconstructs, based on the another parameter of the angle spectrum, the received signal corresponding to the target. The sequence number corresponding to the amplitude value is used to indicate a location of the amplitude value in the angle spectrum.

For example, when the target that is in the angle spectrum and that is greater than or equal to the signal strength threshold is the target with highest signal strength in the angle spectrum, it is assumed that the angle spectrum F obtained by the radar may be represented as a function of an angle: $S(\theta)$. The radar determines a maximum amplitude value A based on $|S(\theta)|$, and an angle $\theta_A$ corresponding to the maximum amplitude A of $S(\theta)$. A complex value of $S(\theta)$ corresponding to the angle $\theta_A$ is $S(\theta_A)$. In this case, only a value of $S(\theta_A)$ is reserved for $S(\theta)$, and values of other points of $S(\theta)$ are all set to 0, to obtain a first signal spectrum $\overline{F}$. The first signal spectrum is represented as a function of the angle $\theta_A$: $S_A(\theta_A)$. $\mathbf{y}_A$ is obtained by performing an IFFT algorithm for $S_A(\theta_A)$. For example, it is assumed that a proportional scaling coefficient $\alpha = 1$. Because a value of only one sampling point of $S_A(\theta_A)$ is not 0, it is assumed that a sequence number of the sampling point whose value is not 0 in the angle spectrum is $I_A$, indicating that the sampling point is an $I_A$th sampling point. Then, for each receive antenna, an IFFT result may be represented as:

$$\mathbf{y}_A = \frac{1}{N} S_A(\theta_A) e^{j\frac{2\pi}{N} I_A n}, n = 0, 1, \ldots, N-1 \qquad \text{(formula 8)}$$

In this formula, N is a total quantity of sampling points in the angle spectrum.

In a third optional example, after it is determined that the angle estimation algorithm is the DFT algorithm, the reconstructed received signal $\mathbf{y}_A$ is equal to a product of the proportional scaling coefficient $\alpha$ and the IDFT of the first signal spectrum $\overline{F}$, a definition of the first signal spectrum $\overline{F}$ is the same as that in the foregoing second optional example, and a representation manner of the IDFT result may be the same as that in formula 8. Therefore, details are not described again.

S405: Eliminate a reconstructed received signal in the angle spectrum to obtain an updated angle spectrum, where the updated angle spectrum represents an angle spectrum that does not include the target.

For a process of S405, refer to S305. Details are not described in this embodiment of this application.

S406: Determine, in the updated angle spectrum, an angle of a target that is greater than or equal to the signal strength threshold.

For S406, refer to S306. Details are not described in this embodiment of this application.

S407: Repeat a process of reconstructing a received signal corresponding to a target that is in the angle spectrum and that is greater than or equal to the signal strength threshold and determining, in the updated angle spectrum, an angle of a target that is greater than or equal to the signal strength threshold.

After that the updated signal spectrum meets the elimination condition is determined, the process of reconstructing the received signal corresponding to the target that is in the signal spectrum and that is greater than or equal to the signal strength threshold and determining, in the updated signal spectrum, the angle of the target that is greater than or equal to the signal strength threshold is repeatedly performed until the updated signal spectrum does not meet the elimination condition. That is, when that the updated signal spectrum meets the elimination condition is determined, S404 and S405 are repeated until the updated signal spectrum does not meet the elimination condition, and then the action is stopped. For S407, refer to S307. Details are not described in this embodiment of this application.

S408: Obtain location information of the determined target based on the determined angle of the target.

After obtaining the angle of the target, the radar may determine the location information of the target based on the obtained angle. The location information may include a location coordinate in a specified three-dimensional coordinate system. For example, the radar may map the target to the specified three-dimensional spatial coordinate system based on a range between the target and the radar and an angle between the target and the radar (that is, an angle obtained by using the foregoing angle spectrum), to form a radar point cloud. An accurate position coordinate of the target is determined based on the radar point cloud.

In conclusion, according to the target detection method provided in this embodiment of this application, the received signal corresponding to the target that is in the angle spectrum and that is greater than or equal to the signal strength threshold is reconstructed, and the reconstructed received signal is eliminated from the angle spectrum, to avoid interference caused by the eliminated received signal to determining another target in the angle spectrum. In this way, a problem of "the strong overwhelms the weak" is reduced, that is, not only a weak signal target can be easily detected, but also impact of the side lobe of a strong signal target on the weak signal target is avoided, so that detection precision of the weak signal target is improved. Especially when the target that is in the angle spectrum and that is greater than or equal to the signal strength threshold is the target with highest signal strength in the angle spectrum, interference caused by the target with highest signal strength in the angle spectrum (strong target signal) to another target (weak target signal) can be avoided, a problem of "the strong overwhelms the weak" can be effectively avoided, and detection precision of the another target can be further improved.

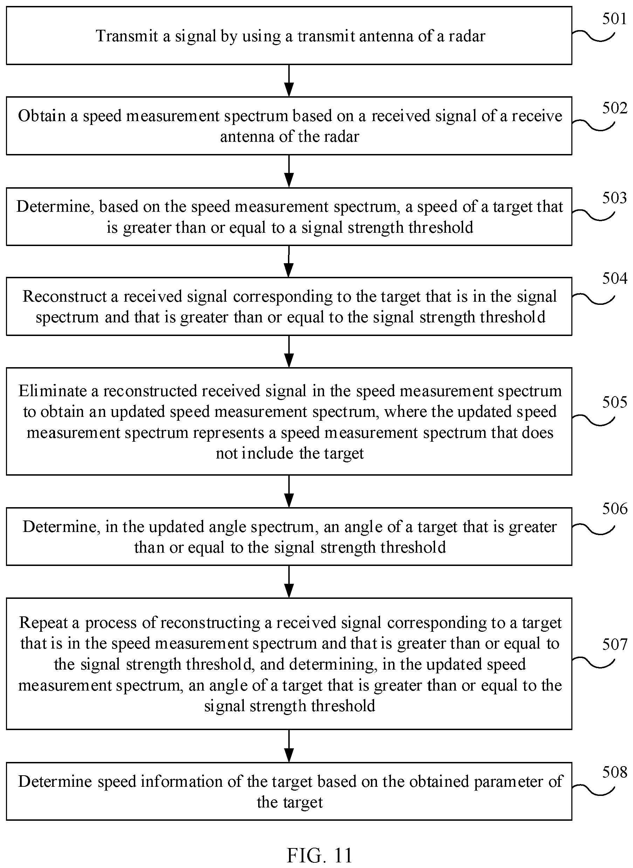

In a second optional implementation, the signal spectrum is a speed measurement spectrum. As shown in FIG. 11, the target detection method includes the following steps.

S501: Transmit a signal by using a transmit antenna of a radar.

For S301, refer to S501. Details are not described in this embodiment of this application.

S502: Obtain a speed measurement spectrum based on a received signal of a receive antenna of the radar.

For a process of obtaining the speed measurement spectrum in S402, refer to S302.

S503: Determine, based on the speed measurement spectrum, a speed of a target that is greater than or equal to a signal strength threshold.

For the speed measurement spectrum, a parameter of the target is a speed. When the target that is in the speed measurement spectrum and that is greater than or equal to the signal strength threshold is a target with highest signal strength in the speed measurement spectrum, because an amplitude at a position with highest signal strength in the speed measurement spectrum is also the maximum, a speed at the position with the highest signal strength is equal to a speed at a position with a maximum amplitude in the speed measurement spectrum, and can be represented by a speed value at the position with the maximum amplitude in the speed measurement spectrum. After determining the speed of the target greater than or equal to the signal strength threshold, the radar may output a detection result to indicate the speed of the target. For example, the detection result includes the speed value at the position with the maximum amplitude.

S504: Reconstruct a received signal corresponding to the target that is in the signal spectrum and that is greater than or equal to the signal strength threshold.

Refer to S302. The speed measurement spectrum may be obtained by using a slow-time dimension FFT algorithm, and the reconstructed received $\mathbf{y}_A$ signal may be constructed by using the foregoing formula 4.

For example, for a target whose range is $R_0$, a radial speed (that is, a speed at which the target moves toward the radar) of the target is $v$, and the FMWC signal includes a plurality of chirp signals. For a signal sent by a transmit antenna, after the radar obtains and processes the signal, a slow-time data sequence corresponding to the target, that is, a speed measurement spectrum, may be approximately represented as:

$$y(m) = A \cdot \exp\left(-j\frac{4\pi R_0}{\lambda}\right)\exp\left(j2\pi\frac{2v}{\lambda}mT\right) \qquad \text{(formula 9)}$$

In this formula, A is an amplitude of the target, the amplitude is a maximum amplitude in the speed measurement spectrum, m is a sequence number of a chirp signal in a slow-time dimension, T is duration of a chirp signal and is also referred to as a period, and exp() indicates an exponential function with a natural constant e as a base.

The MIMO radar is used as an example. If a same transmit antenna sends a chirp signal sequence of uniform time intervals, for a signal sent by a transmit antenna, m is an arithmetic sequence with an interval of Y, and Y represents a sequence number difference corresponding to the transmission time interval, for example, Y=4, and m is a vector formed by values with an interval of Y, such as [1, 5, 9, ...]. If a same transmit antenna sends a chirp signal sequence of non-uniform time intervals, that is, an actual transmitting time sequence of the same transmit antenna in the MIMO radar is changing, for example, m is a vector formed by values [1, 3, 4, 7, 8, 10, ...].

Refer to the foregoing formula 4. m may be updated to an arithmetic sequence with an interval of 1, that is, m is a vector formed by values with an interval of 1, such as [1, 2, 3, ...]. On the basis of maintaining a value of an original sampling point of y(m), y(m) is updated to a value 0 of a sampling point corresponding to a sequence number other than the original m, and the updated y(m) and the original y(m) have a same length. It should be noted that, when the speed measurement spectrum is obtained by using the slow-time dimension FFT algorithm, that the updated y(m) and the original y(m) have the same length means that the updated y(m) and the original y(m) have the same length in the slow-time dimension.

Finally, the reconstructed received signal $y_A$ is represented as:

$$\mathbf{y}_A = \alpha \cdot \text{IFFT}(\bar{F}) \qquad \text{(formula 10)}$$

In this formula, $\alpha$ is a preset proportional scaling coefficient, and the first signal spectrum $\bar{F}$ is updated y(m), for example, $\alpha = 1$.

For a process in S504, refer to S304. Details are not described in this embodiment of this application.

S505: Eliminate a reconstructed received signal in the speed measurement spectrum to obtain an updated speed measurement spectrum, where the updated speed measurement spectrum represents a speed measurement spectrum that does not include the target.

For a process in S505, refer to S305. Details are not described in this embodiment of this application.

S506: Determine, in the updated angle spectrum, an angle of a target that is greater than or equal to the signal strength threshold.

For S506, refer to S306. Details are not described in this embodiment of this application.

S507: Repeat a process of reconstructing a received signal corresponding to a target that is in the speed measurement spectrum and that is greater than or equal to the signal strength threshold and determining, in the updated speed measurement spectrum, an angle of a target that is greater than or equal to the signal strength threshold.

After that the updated speed measurement spectrum meets the elimination condition is determined, the process of reconstructing the received signal corresponding to the target that is in the speed measurement spectrum and that is greater than or equal to the signal strength threshold and determining, in the updated speed measurement spectrum, the angle of the target that is greater than or equal to the signal strength threshold is repeatedly performed until the updated speed measurement spectrum does not meet the elimination condition. That is, when that the updated speed measurement spectrum meets the elimination condition is determined, S504 and S505 are repeated until the updated speed measurement spectrum does not meet the elimination condition, and then the action is stopped. For S507, refer to S307. Details are not described in this embodiment of this application.

S508. Determine speed information of the target based on the obtained parameter of the target.

After obtaining the speed of the target, the radar may determine the speed information of the target based on the obtained speed. The speed information may include a speed of the target relative to the radar and/or an absolute speed of the target. For example, the radar may determine the speed obtained by using the speed measurement spectrum as the speed of the target relative to the radar. Further, optionally, the radar may determine the absolute speed of the target based on the speed of the radar and the speed of the target relative to the radar.

In conclusion, according to the target detection method provided in this embodiment of this application, the received signal corresponding to the target that is in the speed measurement spectrum and that is greater than or equal to the signal strength threshold is reconstructed, and the reconstructed received signal is eliminated from the speed measurement spectrum. This avoids interference of the eliminated received signal to the determining of a parameter of another target in the speed measurement spectrum, and avoids a problem of "the strong overwhelms the weak". Especially, when the target that is in the speed measurement spectrum and that is greater than or equal to the signal strength threshold is the target with highest signal strength in the speed measurement spectrum, interference caused by the target with highest signal strength in the speed measurement spectrum (strong target signal) to another target (weak target signal) can be avoided, a problem of "the strong overwhelms the weak" can be effectively avoided, and detection precision of the another target can be further improved.

For ease of understanding by a reader, the following describes an actual implementation process of an example target detection method in this embodiment of this application. It is assumed that the signal spectrum is an AOA spectrum obtained by using an FFT algorithm, and the target that is in the signal spectrum and that is greater than or equal to the signal strength threshold is the target with highest signal strength in the signal spectrum, the target detection method includes the following steps.

C1: After transmitting a signal by using a transmit antenna of a radar, the radar obtains a received signal y by using a receive antenna of the radar.

C2: Obtain an AOA spectrum by using an FFT algorithm based on the received signal y.

C3: Determine, based on the AOA spectrum, an angle of a target with highest signal strength.

C4: Obtain a maximum amplitude A of the AOA spectrum based on the angle of the target with highest signal strength, and record a sequence number corresponding to the maximum amplitude A in the AOA spectrum.

C5: Reconstruct a received signal $\mathbf{y}_A$ of the target with highest signal strength based on the maximum amplitude A and the recorded sequence number.

C6: Update the received signal y corresponding to the AOA spectrum, so that an updated received signal y = y - $\mathbf{y}_A$.

C7: Obtain an updated AOA spectrum based on the updated received signal y.

C8: Determine, based on the updated AOA spectrum, an angle of a target with highest signal strength.

C9: Detect whether the updated AOA spectrum meets an elimination condition.

C10: Stop an action when the updated AOA spectrum does not meet the elimination condition; or repeat a process from C4 to C10 when the updated AOA spectrum meets the elimination condition, until the updated AOA spectrum does not meet the elimination condition, and stop the action.

It should be noted that the targets described in the foregoing process C3 and process C8 are different targets. Before the process C3, the radar may further detect whether the AOA spectrum meets the elimination condition. When the AOA spectrum does not meet the elimination condition, it indicates that no target exists in the AOA spectrum, and the action is stopped, that is, execution of the process C3 is stopped. When the AOA spectrum meets the elimination condition, the process C3 is performed.

The foregoing process of repeatedly performing C4 to C10 is an iterative process of the received signal y. In an iterative manner, the received signal corresponding to the target with highest signal strength in the speed measurement spectrum is eliminated by using a signal elimination operation (refer to C6 and C7). This avoids interference of the eliminated signal (strong target signal) to the determining and identification of the signal of another target (weak target signal), reduces a problem of "the strong overwhelms the weak", and improves detection accuracy of the weak signal target

It should be noted that, in the foregoing embodiments of this application, the target detection method is mainly described by using an example in which a target that is in the signal spectrum and that is greater than or equal to a signal strength threshold is a target with highest signal strength in the signal spectrum. During actual implementation, when it is determined that the target that is in the signal spectrum and that is greater than or equal to the signal strength threshold includes not only the target with the highest signal strength in the signal spectrum, but also another target, for a processing manner of the another target, refer to a processing manner of the target with the highest signal strength. For example, for a manner of reconstructing a received signal corresponding to the target and a manner of eliminating a received signal corresponding to the target from received signals corresponding to the signal spectrum, refer to a corresponding process of the target with highest signal strength. Details are not described again in this embodiment of this application.

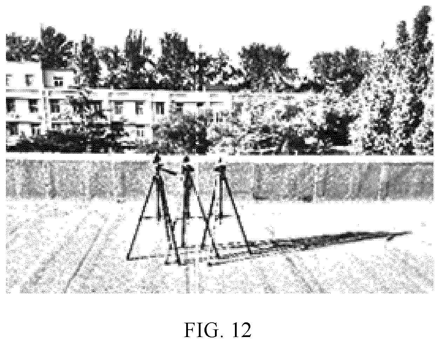

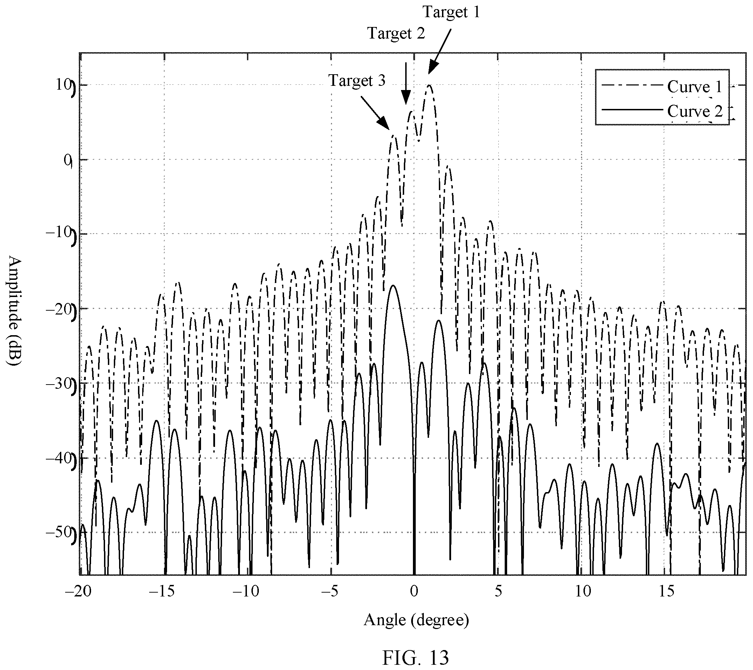

FIG. 12 is a schematic diagram of a target identification scenario in which a radar is located. FIG. 13 is a schematic diagram of comparison of an AOA spectrum according to an embodiment of this application. A curve 1 in FIG. 13 is an AOA spectrum obtained by identifying the scenario shown in FIG. 12 by using a conventional target identification method, a curve 2 in FIG. 13 is a schematic diagram of an AOA spectrum obtained after two target identification procedures are performed (that is, two AOA spectrums are updated) on the scenario shown in FIG. 12 by using the target identification method provided in this embodiment of this application. It is assumed that three cameras in FIG. 12 are respectively a target 1, a target 2, and a target 3 in an order from right to left. Target detection is performed on FIG. 12 by using the conventional target identification method. Because there are a plurality of targets on the AOA spectrum, and an amplitude difference between the plurality of targets may be more than 20 dB, a main lobe of the target 3 is affected by side lobes of two targets with larger amplitudes, the target 1 and the target 2, so that a signal corresponding to the target 3 is overwhelmed, and a problem of "the strong overwhelms the weak" occurs. However, in this embodiment of this application, after two target identification procedures, attenuation of both the target 1 and the target 2 exceeds 20 dB, but peak attenuation of the target 3 is small, and signal side lobes of the target 1 and the target 2 are obviously attenuated. After superimposed impact of signal side lobes of the target 1 and the target 2 is reduced, detection of the target 3 is easier and more accurate. Therefore, according to the target detection method provided in this embodiment of this application, more accurate target detection can be implemented.

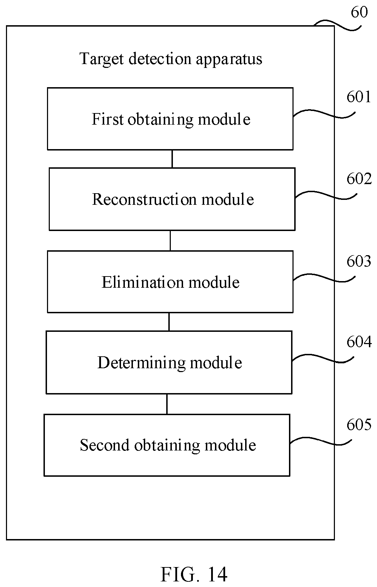

An embodiment of this application provides a target detection apparatus 60. As shown in FIG. 14, the apparatus is used in a radar. The apparatus includes:

a first obtaining module 601, configured to obtain a signal spectrum based on a received signal of a receive antenna of the radar;
a reconstruction module 602, configured to reconstruct a received signal corresponding to a target that is in the signal spectrum and that is greater than or equal to a signal strength threshold;
an elimination module 603, configured to eliminate a reconstructed received signal in the signal spectrum to obtain an updated signal spectrum, where the updated signal spectrum represents a signal spectrum that does not include the target;
a determining module 604, configured to determine, in the updated signal spectrum, a parameter of a target that is greater than or equal to the signal strength threshold; and
a second obtaining module 605, configured to obtain at least one of location information or speed information of the determined target based on the determined parameter of the target.

In conclusion, according to the target detection apparatus provided in this embodiment of this application, the received signal corresponding to the target that is in the signal spectrum and that is greater than or equal to the signal strength threshold is reconstructed by using the reconstruction module, and the reconstructed received signal is eliminated from the signal spectrum by using the elimination module. This avoids interference of the eliminated received signal (strong target signal) to the determining of a parameter of another target (weak target signal) in the signal spectrum, and avoids a problem of "the strong overwhelms the weak". Especially, when the target that is in the signal spectrum and that is greater than or equal to the signal strength threshold is the target with highest signal strength in the signal spectrum, interference caused by the target with highest signal strength in the signal spectrum to another target can be avoided, a problem of "the strong overwhelms the weak" can be effectively avoided, and detection precision of the another target can be further improved.

Optionally, the elimination module 603 is configured to: eliminate the reconstructed received signal in the signal spectrum after it is determined that the signal spectrum meets an elimination condition, to obtain the updated signal spectrum. The elimination condition includes at least one of the following: an amplitude of the target that is in the signal spectrum and that is greater than or equal to the signal strength threshold is less than an amplitude threshold; a peak-to-average ratio of the target that is in the signal spectrum and that is greater than or equal to the signal strength threshold is less than a peak-to-average ratio threshold; and a quantity of times of eliminating a reconstructed received signal after the signal spectrum is obtained is less than a quantity-of-times threshold.

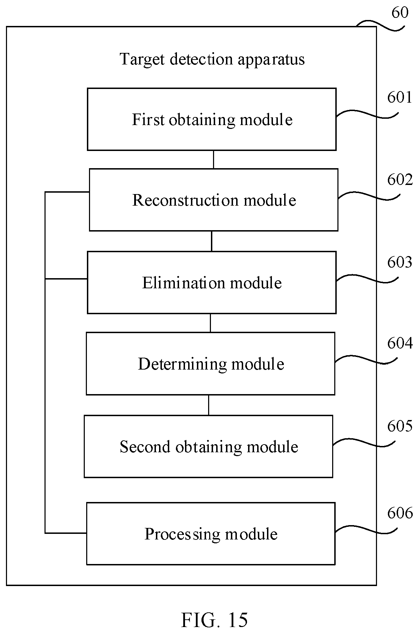

Optionally, as shown in FIG. 15, the apparatus 60 further includes:

a processing module 606, configured to: after the parameter of the target that is greater than or equal to the signal strength threshold is determined in the updated signal spectrum, and it is determined that the updated signal spectrum meets the elimination condition, repeatedly reconstruct a received signal corresponding to a target that is in the signal spectrum and that is greater than or equal to the signal strength threshold and determine, in the updated signal spectrum, a parameter of a target that is greater than or equal to the signal strength threshold, until an updated signal spectrum does not meet the elimination condition.

Optionally, the elimination module 603 is configured to:

determine a difference between the received signal corresponding to the signal spectrum and the reconstructed received signal as a signal corresponding to the updated signal spectrum, and determine the updated signal spectrum based on the signal corresponding to the updated signal spectrum.

Optionally, the reconstruction module 602 is configured to:

determine another parameter in the signal spectrum based on the parameter of the target that is in the signal spectrum and that is greater than or equal to the signal strength threshold, where the another parameter includes one or more of an amplitude value corresponding to the target in the signal spectrum, a sequence number corresponding to the amplitude value, and a phase corresponding to the amplitude value; and

reconstruct, based on the another parameter in the signal spectrum, the received signal corresponding to the target.

Optionally, the target that is in the signal spectrum and that is greater than or equal to the signal strength threshold is a target with highest signal strength in the signal spectrum.

Optionally, after it is determined that the signal spectrum is obtained based on a digital beamforming DBF algorithm, an amplitude of each element of the reconstructed received signal is equal to a preset multiple of a maximum amplitude value of the signal spectrum, and an initial phase of the reconstructed received signal is equal to a phase corresponding to the maximum amplitude value.

For example, the preset multiple is a reciprocal of a quantity of receive antennas of the radar.

Optionally, after it is determined that the signal spectrum is obtained based on a Fourier transform algorithm, the reconstructed received signal is equal to a product of a proportional scaling coefficient and inverse Fourier transform of a first signal spectrum, the first signal spectrum and the signal spectrum have an equal length, and a value of another point in the first signal spectrum other than a point having a same location, amplitude, and phase as a point at which a maximum amplitude value of the signal spectrum is located is 0.

Optionally, the signal spectrum is an angle spectrum, and the parameter of the target includes an angle; or

the signal spectrum is a speed measurement spectrum, and the parameter of the target includes a speed; or
the signal spectrum is a ranging spectrum, and the parameter of the target includes a range.

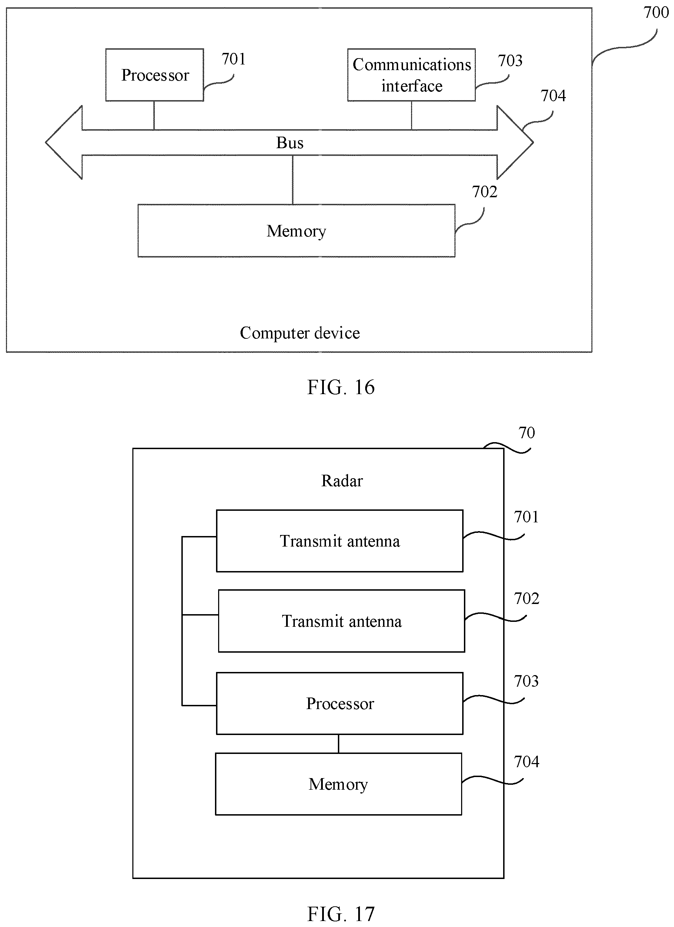

Optionally, FIG. 16 is a possible basic hardware architecture of a computer device 700 according to an embodiment of this application. The computer device 700 may be applied to a radar. As shown in FIG. 16, the computer device 700 includes a processor 701, a memory 702, a communications interface 703, and a bus 704.

The computer device 700 may include one or more processors 701. FIG. 16 shows only one processor 701. Optionally, the processor 701 may be a central processing unit (central processing unit, CPU). If the computer device 700 has a plurality of processors 701, the plurality of processors 701 may be of different types or may be of a same type. Optionally, the plurality of processors 701 in the computer device 700 may be further integrated into a multi-core processor.

The memory 702 stores computer instructions and data. The memory 702 may store computer instructions and data required for implementing the target identification method provided in this application. For example, the memory 702 stores instructions used to implement steps of the target recognition method. The memory 702 may be any one or any combination of the following storage media: a nonvolatile memory (for example, a read-only memory (ROM), a solid-state drive (SSD), a hard disk drive (HDD), or an optical disc), and a volatile memory.

The communications interface 703 may be any one or any combination of components having a network access function such as a network interface (for example, an Ethernet interface) and a wireless network interface card.

The communications interface 703 is configured to perform data communication between the computer device 700 and another computer device or a terminal.

The bus 704 may connect the processor 701 to the memory 702 and the communications interface 703. In this way, through the bus 704, the processor 701 may access the memory 702, and may further exchange data with another computer device or a terminal through the communications interface 703.

In this application, the computer device 700 executes computer instructions in the memory 702, so that the computer device 700 is enabled to implement the target detection method provided in this application.

An embodiment of this application provides a radar 80. The radar may be applied to fields such as national defense, autonomous driving, and geographic mapping. As shown in FIG. 17, the radar 80 includes:

a transmit antenna 801, a receive antenna 802. a processor 803, and a memory 804. The memory 804 stores instructions, and the processor 803 executes the instructions to implement the target detection method provided in embodiments of this application. For structures and functions of the memory and the processor, respectively refer to structures and functions of the processor 701 and the memory 702 corresponding to FIG. 16.

In an example embodiment, a computer-readable storage medium is further provided. The computer-readable storage medium stores a computer program, and when the computer program is executed by a processor, the target detection method provided in embodiments of this application is implemented. For example, the storage medium is a memory including instructions, and the instructions may be executed by a computer device or a processor of a radar to complete the target identification method shown in embodiments of this application. For example, the computer-readable storage medium may be a ROM, a random access memory (RAM), a CD-ROM, a magnetic tape, a floppy disk, or an optical data storage device.

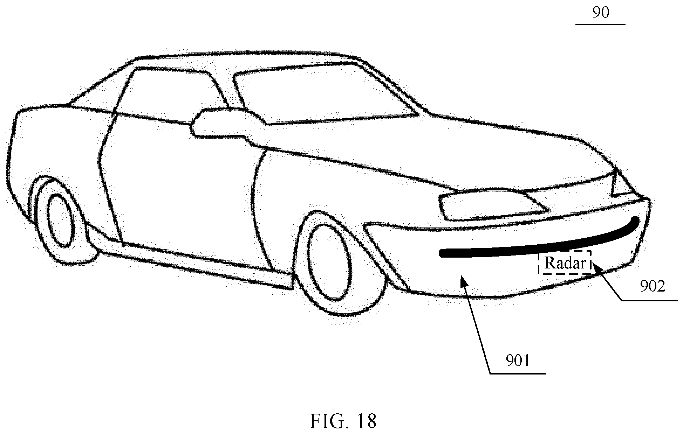

The target detection method provided in embodiments of this application may be applied to a vehicle 90. As shown in FIG. 18, the vehicle 90 includes a vehicle body 901 and a radar 902 provided in this embodiment of this application. The radar 902 may be a front-facing radar or a rear-facing radar of the vehicle. The radar may be the radar 80 in the foregoing embodiment.

For example, the vehicle may further include one or more of a vehicle control unit, a front axle, a front suspension, front wheels, a transmission gearbox, a transmission shaft, a noise absorber, a rear suspension, a steel spring, a shock absorber, rear wheels, a brake, a rear axle, seats, a steering wheel, a steering gear, and a heat sink. This is not limited in this application.

In this application, the terms "first", "second", "third" are merely used for a description purpose, but shall not be understood as an indication or implication of relative importance. The term "at least one" means one or more, and the term "a plurality of" means two or more, unless otherwise expressly limited. A refers to B, which means that A is the same as B or A is a simple variant of B.

It should be noted that, when the target detection apparatus provided in the foregoing embodiment performs the target detection method, division into the foregoing functional modules is taken as an example for illustration. During actual application, the foregoing functions can be allocated to different modules and implemented according to a requirement, that is, an inner structure of a device is divided into different function modules to implement all or some of the functions described above. In addition, the target identification apparatus provided in the foregoing embodiment and the target identification method embodiments pertain to a same concept. For a specific implementation process thereof, refer to the method embodiments. Details are not described herein again.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

## Claims

1.  A target detection method, applied to a radar, wherein the method comprises:

    obtaining (302) a signal spectrum based on a received signal of a receive antenna of the radar;
    reconstructing (304) a received signal corresponding to a target that is in the signal spectrum and that is greater than or equal to a signal strength threshold;
    eliminating (305) the reconstructed received signal in the signal spectrum to obtain an updated signal spectrum, wherein the updated signal spectrum represents a signal spectrum that does not comprise the target;
    determining (306), in the updated signal spectrum, a parameter of another target that is greater than or equal to the signal strength threshold; and
    obtaining (308) at least one of location information or speed information of the determined target based on the determined parameter of the target;
    **characterized in that** the eliminating the reconstructed received signal in the signal spectrum to obtain an updated signal spectrum comprises:
    eliminating the reconstructed received signal in the signal spectrum after determining that the signal spectrum meets an elimination condition, to obtain the updated signal spectrum, wherein the elimination condition comprises at least one of the following:

    an amplitude of the target that is in the signal spectrum and that is greater than or equal to the signal strength threshold is less than an amplitude threshold;
    a peak-to-average ratio of the target that is in the signal spectrum and that is greater than or equal to the signal strength threshold is less than a peak-to-average ratio threshold; and

a quantity of times of eliminating a reconstructed received signal after the signal spectrum is obtained is less than a quantity-of-times threshold.

2. The method according to claim 1, wherein after the determining, in the updated signal spectrum, a parameter of a target that is greater than or equal to the signal strength threshold, the method further comprises:
after determining that the updated signal spectrum meets the elimination condition, repeatedly reconstructing a received signal corresponding to a target that is in the signal spectrum and that is greater than or equal to the signal strength threshold and determining, in the updated signal spectrum, a parameter of a target that is greater than or equal to the signal strength threshold, until an updated signal spectrum does not meet the elimination condition.

3. The method according to claim 1, wherein the eliminating the reconstructed received signal in the signal spectrum to obtain an updated signal spectrum comprises:

   determining a difference between the received signal corresponding to the signal spectrum and the reconstructed received signal as a signal corresponding to the updated signal spectrum; and
   determining the updated signal spectrum based on the signal corresponding to the updated signal spectrum.

4. The method according to any one of claims 1 to 3, wherein the reconstructing a received signal corresponding to a target that is in the signal spectrum and that is greater than or equal to a signal strength threshold comprises:

   determining another parameter of the signal spectrum based on a parameter of the target that is in the signal spectrum and that is greater than or equal to the signal strength threshold, wherein the another parameter comprises one or more of an amplitude value corresponding to the target in the signal spectrum, a sequence number corresponding to the amplitude value, and a phase corresponding to the amplitude value; and
   reconstructing, based on the another parameter of the signal spectrum, the received signal corresponding to the target.

5. The method according to claim 4, wherein the target that is in the signal spectrum and that is greater than or equal to the signal strength threshold is a target with highest signal strength in the signal spectrum.

6. The method according to claim 5, wherein after it is determined that the signal spectrum is obtained based on a digital beamforming DBF algorithm, an amplitude of each element of the reconstructed received signal is equal to a preset multiple of a maximum amplitude value of the signal spectrum, and an initial phase of the reconstructed received signal is equal to a phase corresponding to the maximum amplitude value.

7. The method according to claim 6, wherein the preset multiple is a reciprocal of a quantity of receive antennas of the radar.

8. The method according to claim 5, wherein after it is determined that the signal spectrum is obtained based on a Fourier transform algorithm, the reconstructed received signal is equal to a product of a proportional scaling coefficient and inverse Fourier transform of a first signal spectrum, the first signal spectrum and the signal spectrum have an equal length, and a value of another point in the first signal spectrum other than a point having a same location, amplitude, and phase as a point at which a maximum amplitude value of the signal spectrum is located is 0.

9. The method according to any one of claims 1 to 8, wherein the signal spectrum is an angle spectrum, and the parameter of the target comprises an angle; or

   the signal spectrum is a speed measurement spectrum, and the parameter of the target comprises a speed; or
   the signal spectrum is a ranging spectrum, and the parameter of the target comprises a range.

10. An apparatus, wherein comprising means adapted to execute the method according to any one of claims 1 to 9.

11. A computer-readable storage medium, wherein the computer-readable storage medium stores a computer program, and when the computer program is executed by a processor, the target detection method according to any one of claims 1 to 9 is implemented.

12. A radar, wherein the radar comprises:
a transmit antenna, a receive antenna, a processor, and a memory, wherein the memory stores instructions, and the processor executes the instructions to implement the target detection method according to any one of claims 1 to 9.

**13.** A vehicle, comprising: a vehicle body, and the radar according to claim 12.

**Patentansprüche**

**1.** Zielerkennungsverfahren, das auf ein Radar angewendet wird, wobei das Verfahren Folgendes umfasst:

Erhalten (302) eines Signalspektrums basierend auf einem empfangenen Signal einer Empfangsantenne des Radars;
Rekonstruieren (304) eines empfangenen Signals, das einem Ziel entspricht, das in dem Signalspektrum ist und das größer oder gleich einem Signalstärkenschwellenwert ist;
Entfernen (305) des rekonstruierten empfangenen Signals aus dem Signalspektrum, um ein aktualisiertes Signalspektrum zu erhalten, wobei das aktualisierte Signalspektrum ein Signalspektrum darstellt, das das Ziel nicht umfasst;
Bestimmen (306) eines Parameters eines anderen Ziels in dem aktualisierten Signalspektrum, der größer oder gleich dem Signalstärkenschwellenwert ist; und
Erhalten (308) mindestens eines von Standortinformationen oder Geschwindigkeitsinformationen des bestimmten Ziels basierend auf den bestimmten Parametern des Ziels;
**dadurch gekennzeichnet, dass** das Entfernen des rekonstruierten empfangenen Signals aus dem Signalspektrum, um ein aktualisierte Signalspektrum zu erhalten, Folgendes umfasst:
Entfernen des rekonstruierten empfangenen Signals aus dem Signalspektrum, nach einem Bestimmen, dass das Signalspektrum eine Entfernungsbedingung erfüllt, um das aktualisierte Signalspektrum zu erhalten, wobei die Entfernungsbedingung mindestens eines von Folgendem umfasst:

eine Amplitude des Ziels, die in dem Signalspektrum ist und die größer oder gleich dem Signalstärkenschwellenwert ist, ist weniger als ein Amplitudenschwellenwert;
ein Spitze-zu-Durchschnitt-Verhältnis des Ziels, das in dem Signalspektrum ist und das größer oder gleich dem Signalstärkenschwellenwert ist, ist weniger als ein Spitze-zu-Durchschnitt-Verhältnis-Schwellenwert; und
eine Anzahl der Male, die ein rekonstruiertes empfangenes Signal nach dem Erhalten des Signalspektrums entfernt wird, ist weniger als ein Schwellenwert der Anzahl der Male.

**2.** Verfahren nach Anspruch 1, wobei das Verfahren nach dem Bestimmen eines Parameters eines Ziels in dem aktualisierten Signalspektrum, der größer oder gleich dem Signalstärkenschwellenwert ist, ferner Folgendes umfasst:
nach dem Bestimmen, dass das aktualisierte Signalspektrum die Entfernungsbedingung erfüllt, wiederholtes Rekonstruieren eines empfangenen Signals, das einem Ziel entspricht, das in dem Signalspektrum ist und das größer oder gleich dem Signalstärkenschwellenwert ist, und Bestimmen eines Parameters eines Ziels in dem aktualisierten Signalspektrum, der größer oder gleich dem Signalstärkenschwellenwert ist, bis ein aktualisiertes Signalspektrum die Entfernungsbedingung nicht erfüllt.

**3.** Verfahren nach Anspruch 1, wobei das Entfernen des rekonstruierten empfangenen Signals aus dem Signalspektrum, um ein aktualisiertes Signalspektrum zu erhalten, Folgendes umfasst:

Bestimmen einer Differenz zwischen dem empfangenen Signal, das dem Signalspektrum entspricht, und dem rekonstruierten empfangenen Signal, als ein Signal, das dem aktualisierten Signalspektrum entspricht; und
Bestimmen des aktualisierten Signalspektrums basierend auf dem Signal, das dem aktualisierten Signalspektrum entspricht.

**4.** Verfahren nach einem der Ansprüche 1 bis 3, wobei das Rekonstruieren eines empfangenen Signals, das einem Ziel entspricht, das in dem Signalspektrum ist und das größer oder gleich einem Signalstärkenschwellenwert ist, Folgendes umfasst:

Bestimmen eines weiteren Parameters des Signalspektrums basierend auf einem Parameter des Ziels, der in dem Signalspektrum ist und der größer oder gleich dem Signalstärkenschwellenwert ist, wobei der weitere Parameter eines oder mehrere von einen Amplitudenwert, der dem Ziel in dem Signalspektrum entspricht, einer Sequenznummer, die dem Amplitudenwert entspricht, und einer Phase, die dem Amplitudenwert entspricht, umfasst; und

Rekonstruieren des empfangenen Signals, das dem Ziel entspricht, basierend auf dem weiteren Parameter des Signalspektrums.

**5.** Verfahren nach Anspruch 4, wobei das Ziel, das in dem Signalspektrum ist und das größer oder gleich dem Signalstärkenschwellenwert ist, ein Ziel mit der höchsten Signalstärke in dem Signalspektrum ist.

**6.** Verfahren nach Anspruch 5, wobei, nach dem Bestimmen, dass das Signalspektrum basierend auf einem digitalen Strahlenformungs (DBF) -Algorithmus erhalten wird, eine Amplitude jedes Elements des rekonstruierten empfangenen Signals gleich einem voreingestellten Vielfachen eines maximalen Amplitudenwerts des Signalspektrums ist und eine Anfangsphase des rekonstruierten empfangenen Signals gleich einer Phase ist, die dem maximalen Amplitudenwert entspricht.

**7.** Verfahren nach Anspruch 6, wobei das voreingestellte Vielfache ein Kehrwert einer Anzahl von Empfangsantennen des Radars ist.

**8.** Verfahren nach Anspruch 5, wobei, nach dem Bestimmen, dass das Signalspektrum basierend auf einem Fourier-Transformationsalgorithmus erhalten wird, das rekonstruierte empfangene Signal gleich einem Produkt eines proportionalen Skalierungskoeffizienten und einer inversen FourierTransformation eines ersten Signalspektrums ist, das erste Signalspektrum und das Signalspektrum eine gleiche Länge aufweisen und ein Wert eines anderen Punktes in dem ersten Signalspektrum, außer einem Punkt, der eine gleiche Position, Amplitude und Phase aufweist, wie ein Punkt, an dem sich ein maximaler Amplitudenwert des Signalspektrums befindet, 0 ist.

**9.** Verfahren nach einem der Ansprüche 1 bis 8, wobei das Signalspektrum ein Winkelspektrum ist und der Parameter des Ziels einen Winkel umfasst; oder

das Signalspektrum ein Geschwindigkeitsmessspektrum ist und der Parameter des Ziels eine Geschwindigkeit umfasst; oder

das Signalspektrum ein Reichweitenspektrum ist und der Parameter des Ziels eine Reichweite umfasst.

**10.** Vorrichtung, wobei Mittel umfasst sind, die dazu angepasst sind, das Verfahren nach einem der Ansprüche 1 bis 9 auszuführen.

**11.** Computerlesbares Speichermedium, wobei das computerlesbare Speichermedium ein Computerprogramm speichert und, wenn das Computerprogramm durch einen Prozessor ausgeführt wird, das Zielerkennungsverfahren nach einem der Ansprüche 1 bis 9 implementiert wird.

**12.** Radar, wobei das Radar Folgendes umfasst:
eine Sendeantenne, eine Empfangsantenne, einen Prozessor und einen Speicher, wobei der Speicher Anweisungen speichert und der Prozessor die Anweisungen ausführt, um das Zielerkennungsverfahren nach einem der Ansprüche 1 bis 9 zu implementieren.

**13.** Fahrzeug, umfassend: eine Fahrzeugkarosserie und das Radar nach Anspruch 12.

**Revendications**

**1.** Procédé de détection de cible, appliqué à un radar, dans lequel le procédé comprend :

l'obtention (302) d'un spectre de signal sur la base d'un signal reçu d'une antenne de réception du radar ;
la reconstruction (304) d'un signal reçu correspondant à une cible qui se trouve dans le spectre de signal et qui est supérieure ou égale à un seuil d'intensité de signal ;
l'élimination (305) du signal reçu reconstruit dans le spectre de signal pour obtenir un spectre de signal mis à jour, dans lequel le spectre de signal mis à jour représente un spectre de signal qui ne comprend pas la cible ;
la détermination (306), dans le spectre de signal mis à jour, d'un paramètre d'une autre cible qui est supérieure ou égale au seuil d'intensité de signal ; et
l'obtention (308) d'au moins l'une d'informations de localisation ou d'informations de vitesse de la cible déterminée sur la base du paramètre déterminé de la cible ;

**caractérisé en ce que** l'élimination du signal reçu reconstruit dans le spectre de signal pour obtenir un spectre de signal mis à jour comprend :

l'élimination du signal reçu reconstruit dans le spectre de signal après avoir déterminé que le spectre de signal satisfait à une condition d'élimination, pour obtenir le spectre de signal mis à jour, dans lequel la condition d'élimination comprend au moins l'un de ce qui suit :

une amplitude de la cible qui se trouve dans le spectre de signal et qui est supérieure ou égale au seuil d'intensité de signal est inférieure à un seuil d'amplitude ;

un rapport crête-moyenne de la cible qui se trouve dans le spectre de signal et qui est supérieure ou égale au seuil d'intensité de signal est inférieur à un seuil de rapport crête-moyenne ; et

un nombre de fois d'élimination d'un signal reçu reconstruit après l'obtention du spectre de signal est inférieur à un seuil de nombre de fois.

2. Procédé selon la revendication 1, dans lequel après la détermination, dans le spectre de signal mis à jour, d'un paramètre d'une cible qui est supérieure ou égale au seuil d'intensité de signal, le procédé comprend en outre : après avoir déterminé que le spectre de signal mis à jour satisfait à la condition d'élimination, la reconstruction de manière répétée d'un signal reçu correspondant à une cible qui se trouve dans le spectre de signal et qui est supérieure ou égale au seuil d'intensité de signal et la détermination, dans le spectre de signal mis à jour, d'un paramètre d'une cible qui est supérieure ou égale au seuil d'intensité de signal, jusqu'à ce qu'un spectre de signal mis à jour ne satisfasse plus à la condition d'élimination.

3. Procédé selon la revendication 1, dans lequel l'élimination du signal reçu reconstruit dans le spectre de signal pour obtenir un spectre de signal mis à jour comprend :

la détermination d'une différence entre le signal reçu correspondant au spectre de signal et le signal reçu reconstruit en tant que signal correspondant au spectre de signal mis à jour ; et

la détermination du spectre de signal mis à jour sur la base du signal correspondant au spectre de signal mis à jour.

4. Procédé selon l'une quelconque des revendications 1 à 3, dans lequel la reconstruction d'un signal reçu correspondant à une cible qui se trouve dans le spectre de signal et qui est supérieure ou égale à un seuil d'intensité de signal comprend :

la détermination d'un autre paramètre du spectre de signal sur la base d'un paramètre de la cible qui se trouve dans le spectre de signal et qui est supérieure ou égale au seuil d'intensité de signal, dans lequel l'autre paramètre comprend l'un ou plusieurs d'une valeur d'amplitude correspondant à la cible dans le spectre de signal, d'un numéro de séquence correspondant à la valeur d'amplitude, et d'une phase correspondant à la valeur d'amplitude ; et

la reconstruction, sur la base d'un autre paramètre du spectre de signal, du signal reçu correspondant à la cible.

5. Procédé selon la revendication 4, dans lequel la cible qui se trouve dans le spectre de signal et qui est supérieure ou égale au seuil d'intensité de signal est une cible ayant l'intensité de signal la plus élevée dans le spectre de signal.

6. Procédé selon la revendication 5, dans lequel après qu'il est déterminé que le spectre de signal est obtenu sur la base d'un algorithme de formation de faisceau numérique DBF, une amplitude de chaque élément du signal reçu reconstruit est égale à un multiple prédéfini d'une valeur d'amplitude maximale du spectre de signal, et une phase initiale du signal reçu reconstruit est égale à une phase correspondant à la valeur d'amplitude maximale.

7. Procédé selon la revendication 6, dans lequel le multiple prédéfini est un réciproque d'une quantité d'antennes de réception du radar.

8. Procédé selon la revendication 5, dans lequel après qu'il est déterminé que le spectre de signal est obtenu sur la base d'un algorithme de transformée de Fourier, le signal reçu reconstruit est égal à un produit d'un coefficient de mise à l'échelle proportionnelle et d'une transformée de Fourier inverse d'un premier spectre de signal, le premier spectre de signal et le spectre de signal ont une longueur égale, et une valeur d'un autre point dans le premier spectre de signal autre qu'un point ayant une même position, amplitude et phase qu'un point auquel se trouve une valeur d'amplitude maximale du spectre de signal est 0.

**9.** Procédé selon l'une quelconque des revendications 1 à 8, dans lequel le spectre de signal est un spectre angulaire, et le paramètre de la cible comprend un angle ; ou

le spectre de signal est un spectre de mesure de vitesse, et le paramètre de la cible comprend une vitesse ; ou le spectre de signal est un spectre de portée, et le paramètre de la cible comprend une portée.

**10.** Appareil, dans lequel comprenant un moyen adapté pour exécuter le procédé selon l'une quelconque des revendications 1 à 9.

**11.** Support de stockage lisible par ordinateur, dans lequel le support de stockage lisible par ordinateur stocke un programme informatique, et lorsque le programme informatique est exécuté par un processeur, le procédé de détection de cible selon l'une quelconque des revendications 1 à 9 est mis en œuvre.

**12.** Radar, dans lequel le radar comprend :
une antenne de transmission, une antenne de réception, un processeur, et une mémoire, dans lequel la mémoire stocke des instructions, et le processeur exécute les instructions pour mettre en œuvre le procédé de détection de cible selon l'une quelconque des revendications 1 à 9.

**13.** Véhicule, comprenant : une carrosserie, et le radar selon la revendication 12.

Identified

Unidentified

FIG. 1

EP 4 163 671 B1

FIG. 2

Transmit a signal by using a transmit antenna of a radar — 301

Obtain a signal spectrum based on a received signal of a receive antenna of the radar — 302

Determine, based on the signal spectrum, a parameter of a target that is greater than or equal to a signal strength threshold — 303

Reconstruct a received signal corresponding to the target that is in the signal spectrum and that is greater than or equal to the signal strength threshold — 304

Eliminate a reconstructed received signal in the signal spectrum to obtain an updated signal spectrum, where the updated signal spectrum represents a signal spectrum that does not include the target — 305

Determine, in the updated signal spectrum, a parameter of a target that is greater than or equal to the signal strength threshold — 306

Repeatedly reconstruct a received signal corresponding to a target that is in the signal spectrum and that is greater than or equal to the signal strength threshold and determine, in the updated signal spectrum, a parameter of a target that is greater than or equal to the signal strength threshold — 307

Obtain at least one of location information or speed information of the determined target based on the determined parameter of the target — 308

FIG. 3

Chirp signal

Sequence number: 1

Transmit

| Tx1 |
|---|

L
Receive   receive
antennas

1
1:  | Tx1 |

1
2:  | Tx1 |

⋮

1
L:  | Tx1 |

FIG. 4

S chirp signals

Sequence number:

| | 1 | 2 | 3 | 4 | | S–3 | S–2 | S–1 | S |
|---|---|---|---|---|---|---|---|---|---|
| Transmit | Tx0 | Tx0 | Tx0 | Tx0 | ··· | Tx0 | Tx0 | Tx0 | Tx0 |

| | 1 | 2 | 3 | 4 | | S–3 | S–2 | S–1 | S |
|---|---|---|---|---|---|---|---|---|---|
| 1: | Tx0 | Tx0 | Tx0 | Tx0 | ··· | Tx0 | Tx0 | Tx0 | Tx0 |

| | 1 | 2 | 3 | 4 | | S–3 | S–2 | S–1 | S |
|---|---|---|---|---|---|---|---|---|---|
| 2: | Tx0 | Tx0 | Tx0 | Tx0 | ··· | Tx0 | Tx0 | Tx0 | Tx0 |

L Receive receive antennas

| | 1 | 2 | 3 | 4 | | S–3 | S–2 | S–1 | S |
|---|---|---|---|---|---|---|---|---|---|
| L: | Tx0 | Tx0 | Tx0 | Tx0 | ··· | Tx0 | Tx0 | Tx0 | Tx0 |

FFT

M sampling points

M range units

FIG. 5

S chirp signals

Sequence numbers
of chirp signals:

| 1 | 2 | 3 | 4 | ... | S–3 | S–2 | S–1 | S |

M range
units

FIG. 6

FIG. 7

CFAR detection result: (x1, y1)

FIG. 8

FIG. 9

| Transmit a signal by using a transmit antenna of a radar | 401 |

↓

| Obtain an angle spectrum based on a received signal of a receive antenna of the radar | 402 |

↓

| Determine, based on the angle spectrum, an angle of a target that is greater than or equal to a signal strength threshold | 403 |

↓

| Reconstruct a received signal corresponding to the target that is in the signal spectrum and that is greater than or equal to the signal strength threshold | 404 |

↓

| Eliminate a reconstructed received signal in the angle spectrum to obtain an updated angle spectrum, where the updated angle spectrum represents an angle spectrum that does not include the target | 405 |

↓

| Determine, in the updated angle spectrum, an angle of a target that is greater than or equal to the signal strength threshold | 406 |

↓

| Repeat a process of reconstructing a received signal corresponding to a target that is in the angle spectrum and that is greater than or equal to the signal strength threshold, and determining, in the updated angle spectrum, an angle of a target that is greater than or equal to the signal strength threshold | 407 |

↓

| Obtain location information of the determined target based on the determined angle of the target | 408 |

FIG. 10

Transmit a signal by using a transmit antenna of a radar · 501

Obtain a speed measurement spectrum based on a received signal of a receive antenna of the radar · 502

Determine, based on the speed measurement spectrum, a speed of a target that is greater than or equal to a signal strength threshold · 503

Reconstruct a received signal corresponding to the target that is in the signal spectrum and that is greater than or equal to the signal strength threshold · 504

Eliminate a reconstructed received signal in the speed measurement spectrum to obtain an updated speed measurement spectrum, where the updated speed measurement spectrum represents a speed measurement spectrum that does not include the target · 505

Determine, in the updated angle spectrum, an angle of a target that is greater than or equal to the signal strength threshold · 506

Repeat a process of reconstructing a received signal corresponding to a target that is in the speed measurement spectrum and that is greater than or equal to the signal strength threshold, and determining, in the updated speed measurement spectrum, an angle of a target that is greater than or equal to the signal strength threshold · 507

Determine speed information of the target based on the obtained parameter of the target · 508

FIG. 11

FIG. 12

FIG. 13

60

## Target detection apparatus

First obtaining module — 601

Reconstruction module — 602

Elimination module — 603

Determining module — 604

Second obtaining module — 605

FIG. 14

FIG. 15

700

Processor 701

Communications interface 703

704

Bus

702

Memory

Computer device

FIG. 16

70

Radar

Transmit antenna 701

Transmit antenna 702

Processor 703

Memory 704

FIG. 17

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 9778355 B2